# EUROPEAN PATENT APPLICATION

(11) **EP 4 835 753 A1**
(43) Date of publication of application: **04.11.2026**
(21) Application number: 26152131.4
(22) Date of filing: 15.01.2026
(51) Int. Cl.: G06N 10/40

(54) **PARTICLE TRAP APPARATUS**

(30) Priority: 30.04.2025 EP 25173760
(71) Applicant: QUDORA Technologies GmbH, 38126 Braunschweig (DE)
(72) Inventor: Zarantonello, Giorgio, 38100 Braunschweig (DE); Wahnschaffe, Martina, 38100 Braunschweig (DE)
(74) Representative: Betten & Resch

(57) **Abstract**

The present disclosure relates to a particle trap apparatus, a method of trapping a particle in the particle trap apparatus and a method of producing a particle trap apparatus. The particle trap apparatus comprises a set of trapping electrodes, a ground electrode and a manipulation electrode, the set of trapping electrodes being configured to provide a trapping potential of a particle trap, the manipulation electrode being configured to provide an oscillating magnetic field configured to perform a quantum operation on a trapped particle. The ground electrode or one of the set of trapping electrodes is a structured electrode. The structured electrode comprises a first area, a second area and a set of recesses. The first area is adjacent to a portion of the manipulation electrode. Each recess of the set of recesses is located between the first area and the second area. The portion of the manipulation electrode extends along a first portion length in a first direction and the set of recesses extends along a first recess set length in the first direction. The first recess set length is at least as long as the first portion length and the first portion length fully overlaps with the first recess set length when viewed in a second direction orthogonal to the first direction.

## Description

### TECHNICAL FIELD

The present disclosure relates to a particle trap apparatus, a method of operating a particle trap apparatus and a method of producing a particle trap apparatus.

### BACKGROUND

The implementation of quantum information processing, precision metrology, atomic clocks or high resolution-mass spectrometry requires systems with a high degree of quantum control and high lifetimes of quantum states. Particle traps are promising candidates for this task, as they allow to trap, store and manipulate single and multiple particles and therefore to exploit the quantum nature of single and multiple trapped particles. Control over the quantum nature of a trapped particle can be utilized e.g. for the realization of qubits for quantum computers.

Gate operations on trapped particles may be performed by means of lasers that e.g. address internal states of trapped particles. Another option for performing gate operations is to employ oscillating magnetic fields in the microwave range. This approach e.g. allows to achieve extremely high two-qubit gate fidelities. However, such an approach typically requires sufficient control over the oscillating magnetic field.

One of the main challenges in particle traps that employ oscillating magnetic fields for performing quantum operations is to provide reliable quantum gates when scaling up to a large-scale system. Especially in large-scale systems/systems with large electrode structures, the oscillating magnetic field depends strongly on the geometry of the overall electrode structure.

On the one hand, the field distribution of the propagating wave of the oscillating magnetic field may change due to a coupling of the oscillating magnetic field with the electrodes of the particle trap apparatus, e.g. those in the vicinity of a manipulation electrode that provides the oscillating magnetic field. This coupling may cause eddy currents in the electrodes, changing the overall current distribution in the electrode structure, and may hence affect the distribution of the oscillating magnetic field used to perform quantum operations. This effect always occurs and needs to be taken into account designing the manipulation electrode geometry.

On the other hand, the phase of the propagating wave is determined by the overall electrode structure. Due to the length of the overall structure, in particular the ground or large trapping electrode, resonance structures may be formed. These resonance structures shift the phase of the propagating wave, leading to a different oscillating magnetic field distribution. These resonances may have a negative influence on the behaviour of the quantum gate in the nearfield of the trapped particle of one particle trap as well as on further particle traps, located further away.

### SUMMARY

It is an object of the present disclosure to overcome the above-mentioned disadvantages and in particular to provide a particle trap apparatus that allows for improved oscillating magnetic field control and to suppress unwanted resonance structures which may shift the phase of the propagating wave.

This can be realized by isolating areas of electrodes and/or by structuring electrodes. It is also an object of the present disclosure to provide a method for operating a particle trap apparatus and to provide a method of producing a particle trap apparatus.

The present invention is defined by the independent claims. Dependent claims specify embodiments thereof.

According to a first aspect of the present disclosure, a particle trap apparatus is provided. The particle trap apparatus comprises a set of trapping electrodes, a ground electrode and a manipulation electrode. The set of trapping electrodes is configured to provide a trapping potential of a particle trap. The ground electrode is configured to provide an electrical ground. The manipulation electrode is configured to provide an oscillating magnetic field. The oscillating magnetic field is configured to perform a quantum operation on a particle trapped in the particle trap at a manipulation area of the particle trap apparatus. The ground electrode and/or one of the set of trapping electrodes is a structured electrode. In a cross-sectional top view, the structured electrode comprises a first area, a second area and a set of recesses. The first area is adjacent to a portion of the manipulation electrode. The first area is adjacent to one or more recesses of the set of recesses. Each recess of the set of recesses is located between the first area and the second area. Each recess of the set of recesses does not comprise a conductive material of any electrode of the set of trapping electrodes and of the manipulation electrode. In the cross-sectional top view, the portion of the manipulation electrode extends along a first portion length in a first direction. In the cross-sectional top view, the set of recesses extends along a first recess set length in the first direction. In the cross-sectional top view, the first recess set length is at least as long (or e.g. longer) as the first portion length. In the cross-sectional top view, the first portion length fully overlaps with the first recess set length when viewed in a second direction orthogonal to the first direction.

Implementations of the present disclosure may allow to isolate and control electrode structures in particle trap apparatuses comprising manipulation electrodes, e.g. by physically separating or segmenting areas of the structured electrode in the cross-sectional top view. This may allow to suppress formation of resonance structures and may avoid unwanted phase shift of the propagating wave supplying the oscillating magnetic field. This may be highly advantageous in terms of scaling up a particle trap apparatus, e.g. to a larger size and/or to a higher number of trapped particles/qubits, e.g. in particular in particle trap apparatuses with multiple manipulation areas, e.g. with multiple manipulation electrodes and/or multiple manipulation electrode portions, e.g. with a large electrode design. Thereby, the present disclosure addresses the pressing scaling challenge.

Implementations of the present disclosure may allow to structure one or more electrodes of the set of trapping electrodes or the ground electrode, located in vicinity to a manipulation electrode, by the set of recesses. This may prevent coupling of the oscillating magnetic field to the structured electrode, by structuring the electrode into areas that e.g. do not allow coupling/pick-up of the oscillating magnetic field. Therefore, resonance structures at the frequency of the oscillating magnetic field may be avoided in the structured electrode. This may increase the fidelity of quantum operations that may be applied to a trapped particle, by reducing/eliminating potential coupling paths in areas of the particle trap where the oscillating magnetic field may be present.

Implementations of the present disclosure may allow to reduce and/or to avoid crosstalk between different manipulation areas/electrodes/portions of manipulation electrodes, which may improve the scalability of the particle trap apparatus and the fidelity of quantum operations.

The set of recesses may allow to break and/or reduce potential coupling paths of the oscillating magnetic field within the structured electrode, which may e.g. otherwise be present in the (e.g. then non-structured) electrode.

Implementations of the present disclosure may allow to reduce a coupling of the oscillating magnetic field to the structured electrode, e.g. to the first area of the structured electrode and/or to the second area of the structured electrode. The coupling of the oscillating magnetic field may be reduced e.g. by a factor of 50% or more, or 60 % or more, or 70 % or more, or 80 % or more, or 90 % or more, or 95 % or more. The coupling may e.g. also be fully reduced.

The particle trap apparatus may comprise the particle trap.

The particle trap apparatus may be used for quantum computing. The particle trap apparatus may be a quantum computer/may be comprised in a quantum computer. The particle trap apparatus may be used for an (atomic) clock/for a frequency standard. E.g., the particle trap apparatus may be/may be comprised in an (atomic) clock/a frequency standard. The particle trap apparatus may be used for quantum sensing. E.g., the particle trap apparatus may be/may be comprised in a quantum sensing apparatus/a quantum sensor.

The particle trap may be configured to trap neutral atoms/particles. The particle trap may be an ion trap, i.e. a trap configured to trap charged atoms/charged particles. The present description is generally applicable to all kinds of particle traps, including traps for neutral atoms/particles and traps for charged particles/ion traps, unless specified otherwise and unless otherwise contradictory.

The particle trap apparatus e.g. may comprise a laser. The laser may be configured to provide a trapping potential to trap particles, e.g. neutral particles and/or charged particles. The laser may be configured to provide an oscillating electromagnetic field, e.g. a standing wave.

The particle trap may be configured to trap one or more particles, e.g. (neutral) particles/atoms/ions therein. Each particle/atom/ion may be an individual qubit of a quantum computer. Alternatively, an individual qubit of a quantum computer may be formed by a plurality of particles/atoms/ions trapped in the particle trap, or in a plurality of particle traps.

Herein, the term "particle trap" is used, which may refer to ion traps. The term "particle" e.g. may refer to neutral particles, e.g. atoms/molecules, and/or to charged particles, e.g. charged atoms/molecules, i.e. ions. The term "particle" may also refer to neutral/charged particles in general and may e.g. also cover electrons. The term "ion" may also refer to electrons or other charged particles.

The particle trap/the particle trap apparatus may be configured to trap and/or to manipulate a particle in the particle trap. An ion trapped in the particle/ion trap e.g. may be one of the following species: Ba⁺, Be⁺, Ca⁺, Mg⁺, Sr⁺, Yb⁺. The particle trap may also be configured to trap particles of a plurality of species, e.g. double species. E.g., the particle trap apparatus may be configured to perform (sympathetic) cooling via particles (e.g., neutral atoms/ions) of one species, and computation via particles (e.g., neutral atoms/ions) of another species.

The particle trap/the particle trap apparatus may be configured to trap (cold) neutral atoms and ions, e.g. the particle trap may be a hybrid trap. This may allow for a higher versatility of the particle trap apparatus.

The particle trap/the particle trap apparatus may be configured to trap atomic particles and/or molecular particles, e.g. single particles and/or plurality of particles, e.g. single, doubly or highly ionized particles.

The particle trap may be any type of particle trap. E.g., the particle trap may be a Paul trap, which sometimes is also referred to as "RF trap" and/or as "Quadrupole ion trap". The trapping potential of a Paul trap comprises an RF trapping potential, provided by a set of RF electrodes, and a DC trapping potential, provided by a set of DC electrodes. The particle trap may also be a (planar) Penning trap and/or a combination of a Paul trap and a Penning trap. The trapping potential of a Penning trap comprises a DC trapping potential, provided by a set of DC electrodes, and a homogenous magnetic field, typically provided by a superconducting magnet.

The particle trap may also be a magneto-optical trap. The particle trap may be a chip trap.

The particle trap may comprise a static magnetic field, e.g. in addition to the trapping potential provided by the trapping electrodes. The particle trap may comprise a magnetic trapping potential, e.g. in addition to the trapping potential provided by the trapping electrodes, which e.g. may be considered as an electric trapping potential. The particle trap apparatus may comprise magnetic potential means, e.g. a coil and/or a permanent magnet. The magnetic potential means may be configured to provide the magnetic trapping potential. The magnetic potentials means may be configured to provide an (e.g. static) magnetic field for manipulating trapped particles/atoms/ions, e.g. for performing gate operations.

The particle trap apparatus may comprise a single particle trap or a plurality of particle traps. Features disclosed with respect to a single particle trap may also apply to one or more/each of a plurality of particle traps, unless specified otherwise and unless otherwise contradictory.

Each particle trap may have respective trapping electrodes and optionally a respective manipulation electrode. The manipulation electrodes of the respective particle traps may be conductively connected to each other. The manipulation electrodes of the respective particle traps may also be conductively independent from each other, e.g. not conductively connected to each other.

Particle traps of the plurality of particle traps may have different respective functions such as detection, cooling, storage and/or performing quantum gates. This may increase the variability of the particle trap apparatus. Further, dedicated particle traps may perform their respective functions with a higher fidelity and/or less decoherence. Further, having a plurality of particle traps may facilitate scalability of the particle trap apparatus. The particle trap apparatus may comprise one or more particle traps for each respective function, e.g. one or more detection traps, one or more cooling traps, one or more storage traps, and/or one or more manipulation/computation/gate traps. A detection trap may be configured to read out an internal state of a particle trapped in the detection trap. A cooling trap may be configured to cool a particle trapped in the cooling trap. A storage trap may be configured to store one or more particles, e.g. when they are not required for computations. A manipulation trap may be configured to perform quantum gates on a single particle and/or on multiple particles trapped in the manipulation trap.

The particle trap apparatus may be configured to shuttle particles between individual particle traps of the plurality of particle traps. Such a configuration is sometimes referred to as "Quantum CCD". Especially in this context, the present disclosure may be particularly advantageous in order to avoid/reduce crosstalk between different particle traps, in order to improve the fidelity of quantum operations and in order to improve scalability.

The particle trap may be a surface trap, e.g. a 2D Paul trap. The particle trap may also be a 3D trap, where e.g. trapping electrodes, e.g. DC electrodes and RF electrodes, are located on two different substrates facing towards each other, and where the particle trap is located between the two substrates. Such 3D traps may have the advantage that higher trap depths can be achieved as compared to 2D traps. The particle trap apparatus may comprise a plurality of 3D particle traps that e.g. may be located above each other.

The set of trapping electrodes may comprise one trapping electrode or a plurality of trapping electrodes.

The oscillating magnetic field may have a frequency of 1 MHz or more. The oscillating magnetic field may have a frequency of 100 GHz or less. A driving signal of the manipulation electrode may have a frequency of 1 MHz or more. A driving signal of the manipulation electrode may have a frequency of 100 GHz or less. A driving signal of the manipulation electrode may be a microwave signal.

E.g., the manipulation electrode may be configured to generate an oscillating magnetic nearfield in the particle trap, e.g. comprising a gradient. In some non-limiting embodiments, the frequency of the oscillating magnetic nearfield e.g. may be 10 MHz or more and e.g. 10 GHz or less. In some non-limiting embodiments using e.g. a Penning trap as the particle trap, the frequency of the oscillating magnetic field e.g. may be 20 GHz or more and e.g. 100 GHz or less. In some non-limiting embodiments, the frequency of the oscillating magnetic field may be e.g. 1 MHz or more and e.g. 10 MHz or less.

The frequency of the oscillating magnetic field may depend on the species of the trapped particle/atom/ion.

The quantum operation performed by the oscillating magnetic field may be e.g. a gate operation, e.g. a 2-qubit gate operation or a 1-qubit gate operation.

The gate operation may be performed using e.g. a pi-transition or a sigma-transition or a higher order transition. The oscillating magnetic field pattern is not particularly limited, and various patterns may be used. The internal transition of a particle used for the gate operation may be e.g. a hyperfine transition, a Zeeman-transition, a fine-structure transition, e.g. any type of magnetic dipole and/or higher-order transitions.

An extremum position (of the amplitude) of the oscillating magnetic field may be used for performing gate operations. One favorable configuration may be to perform the gate operations at a position of the oscillating magnetic field where the gradient of the oscillating magnetic field is maximal and where the field amplitude of the oscillating magnetic field is minimal/vanishing.

The manipulation electrode may be configured to provide the oscillating magnetic field when corresponding currents are applied to the manipulation electrode (e.g. to the portion of the manipulation electrode). The oscillating magnetic field may be configured to perform and/or to be used for a quantum gate operation on a particle trapped in the particle trap. Optionally, the manipulation electrode may be configured to generate an oscillating magnetic nearfield in the particle trap, e.g. comprising a gradient. The oscillating magnetic field may be a microwave oscillating magnetic field.

The manipulation electrode may be configured to provide a plurality of oscillating magnetic fields at a plurality of manipulation areas of the particle trap apparatus.

The manipulation electrode (e.g., the portion of the manipulation electrode) may comprise a plurality of surfaces that each may have a direct line of sight to a particle trapped in the particle trap and/or to the manipulation area. These surfaces may be connected with each other, e.g. in a lower layer of the particle trap apparatus/of a multi-layer structure thereof. The manipulation electrode may be configured to provide the oscillating magnetic field via the plurality of these surfaces, e.g. comprised in the first/second portions of the manipulation electrode, which e.g. may implement a multi-wire like electrode geometry.

The manipulation electrode may be conductively connected to the ground electrode, e.g. one end of the manipulation electrode. E.g., the other end of the manipulation electrode may be conductively connected to a feedline. The manipulation electrode may be configured to implement a travelling wave structure.

If the manipulation electrode is conductively connected to the ground electrode, this does not imply that the manipulation electrode is integrated into the ground electrode or vice versa. The manipulation electrode, also if conductively connected to the ground electrode, is still configured to provide the oscillating magnetic field, and the ground electrode, also if the manipulation electrode is conductively connected thereto, is still configured to provide the electrical ground. Conductively connecting the manipulation electrode to the ground electrode may be considered as terminating the manipulation electrode. Also if conductively connected, the manipulation electrode and the ground electrode are distinct components with respective distinct functionalities.

It may be provided that the manipulation electrode is not conductively connected to the ground electrode. E.g., one end of the manipulation electrode may be connected to a feedline. The manipulation electrode may be configured to implement a (resonant) standing wave structure.

The particle trap apparatus may comprise a plurality of manipulation electrodes that e.g. may be configured to jointly provide the oscillating magnetic field. The particle trap apparatus may comprise a plurality of manipulation electrodes that e.g. may be configured to provide a plurality of oscillating magnetic fields, e.g. at different locations of the particle trap apparatus, e.g. for different particle traps. The location of an oscillating magnetic field may be considered as a manipulation area. The number of manipulation areas may be different as compared to the number of manipulation electrodes. E.g., one manipulation electrode may be configured to provide a plurality of oscillating magnetic fields at different locations/a plurality of manipulation areas. The number of manipulation areas may be larger or smaller as compared to the number of manipulation electrodes, or may be identical (e.g., each manipulation electrode may provide a corresponding manipulation area). Features disclosed with respect to one manipulation electrode may also apply to one or more/each of a plurality of manipulation electrodes, unless specified otherwise and unless otherwise contradictory.

The manipulation electrode may comprise multiple windings/turns, e.g. windings/turns of a meander-shaped electrode.

The manipulation electrode e.g. may be one of the following: a single-wire like electrode, a two-wire like electrode, a four-wire like electrode, a five-wire like electrode, a single waveguide-like electrode, a coplanar waveguide-like electrode, a meander-shaped electrode, a trident-like electrode, an inverse trident-shaped electrode, a W-shaped electrode, a U-shaped electrode, a spiral-like electrode.

E.g., a meander-shaped electrode is described in Carsjens et. al., "Surface-electrode Paul trap with optimized near-field microwave control", Appl. Phys. B 114, 243 (2014), doi: 10.1007/s00340-013-5689-6.

The oscillating magnetic field may be e.g. a quadrupole field or a single-wire field or a two-wire field or a field generated by a spiral-like manipulation electrode.

If the manipulation electrode is a single waveguide-like electrode, it may e.g. comprise a single-wire like area that may have a direct line-of-sight to a trapped particle.

The ground electrode e.g. may be conductively connected to/comprised in an overall electrical ground of the particle trap apparatus.

The structured electrode e.g. may be structured due to comprising the recesses of the set of recesses, e.g. the set of recesses may be understood as being/being comprised in the "structure" of the structured electrode.

The cross-sectional top view may be a cross-sectional top view of the particle trap apparatus.

It may be provided that in the cross-sectional top view, the first direction and/or the second direction are e.g. parallel to a respective direction of an edge of the structured electrode. It may be provided that the first direction has an angle with a primary direction of current flow in the portion of the manipulation electrode that is e.g. 30 degrees or more, or 45 degrees or more, or 60 degrees or more, or 90 degrees or more. It may be provided that a primary direction of current flow in the portion of the manipulation electrode (e.g., when the manipulation electrode provides the oscillating magnetic field) is orthogonal to the first direction. Alternatively, it may be provided that the primary direction of current flow is parallel to the first direction.

It may be provided that the first area and/or the second area has a rectangular shape or a U-shape or a ring-shape. It may be provided that in the cross-sectional top view, each point of the first area/second area is connectable to each other point of the first area/second area by a line (e.g. a straight line) that is fully located within the first/second area. Different areas of the structured electrode may be considered/selected as the first/second area, e.g. as long as the requirements of these areas as outlined above and below are met.

It may be provided that the first area extends from the portion of the manipulation electrode/first portion length to each recess of the set of recesses/each position of the recess set length, e.g. if no recesses of the set of recesses overlap in the second direction. It may be provided that the first area extends from the portion of the manipulation electrode/first portion length to one or more recesses of the set of recesses/each position of the recess set length.

It may be provided that the first area comprises only points of the structured electrode that are located between the set of recesses and the portion of the manipulation electrode, e.g. between in the second direction. It may be provided that the first area comprises all points of the structured electrode that are located between the set of recesses and the portion of the manipulation electrode, e.g. between in the second direction.

It may be provided that the first area extends along the first portion length in the first direction, and from the portion of the manipulation electrode to one or more recesses of the set of recesses/to the closest recess of the set of recesses in the second direction, e.g. to the closest recess(es) of each position of the first portion length.

It may be provided that a length of the first area in the first direction is at least as long as the first portion length. It e.g. may be provided that the length of the first area in the first direction fully overlaps with the first portion length when viewed in the second direction. It may be provided that the first area has a length in the first direction that is less than or equal to the first recess set length. It e.g. may be provided that the length of the first area in the first direction fully overlaps with the first recess set length when viewed in the second direction.

It may be provided that in the cross-sectional top view, the first area embeds/surrounds the portion of the manipulation electrode, e.g. at least partially or e.g. fully.

It may be provided that each point of the first area is located between the portion of the manipulation electrode and one or more recesses of the set of recesses, e.g. in the second direction.

It may be provided that the second area has a length in the first direction, less than/equal to the first recess set length. It may be provided that the length of the second area in the first direction and the first recess set length fully overlap when viewed in the second direction.

It may be provided that in the cross-sectional top view, the length of the second area in the first direction fully overlaps with the length of the first area in the first direction when viewed in the second direction. It may be provided that in the cross-sectional top view, the length of the second area in the first direction fully overlaps with the first portion length when viewed in the second direction. It may be provided that the first area and the second area have the same length in the first direction. It may be provided that the length of the first area in the first direction and the length of the second area in the first direction fully overlap with the recess set length when viewed in the second direction.

It may be provided that the length of the second area in the first direction is less than/equal to the first recess set length in the first direction. It may be provided that the length of the second area in the first direction is/is at least the first portion length.

It may be provided that the second area is not adjacent to the portion of the manipulation electrode/any portion of the manipulation electrode/the manipulation electrode.

It may be provided that the structured electrode comprises more than two areas, each pair of which having a respective set of recesses located in between them.

It may be provided that in addition to the recesses of the set of recesses, the structured electrode comprises further recesses, e.g. between the first area and the second area and/or not between the first area and the second area, e.g. (not) between in the second direction.

A recess of the set of recesses may be located between more than two areas, e.g. when the recess has a labyrinth-like shape or another shape that involves turns/windings. It may e.g. be provided that the structured electrode comprises a plurality of areas on one side of the set of recesses.

It may e.g. be provided that the set of recesses comprises each recess located between the first area and the second area, e.g. between in the second direction. It may e.g. be provided that the set of recesses comprises each recess located between the portion of the manipulation electrode and the second area, e.g. between in the second direction.

It may be provided that for each recess of the set of recesses, at least a portion of said recesses is located between the first area and the second area, e.g. between in the second direction, e.g. when viewed in the second direction.

It may be provided that the set of recesses surrounds the portion of the manipulation electrode, e.g. at least partially or fully, e.g. in a U-shape.

It may be provided that the recesses of the set of recesses are slit-like recesses. The recesses of the set of recesses e.g. may have at least one of the following forms/shapes: square, rectangular, circular, triangular. Recesses of the set of recesses may have the same form/shape or recesses of the set of recesses may have different forms/shapes.

It may be provided that in a cross-sectional top view, the first recess set length has a starting point (e.g., the lowest point of all recesses of the set of recesses in the first direction) and an endpoint (e.g. the highest point of all recesses of the set of recesses in the first direction). It may be provided that the recess set length is defined by the connecting line of the starting point and the endpoint.

It may be provided that the set of recesses comprises one recess or a plurality of recesses. E.g. in the case of one recess, the recess set length may be given by the length of the recess in the first direction. E.g. in case of the plurality of recesses, the first recess set length may be given by the length between the two points inside recesses of the set of recesses that are spaced furthest away from each other, e.g. in the first direction.

It may be provided that each recess of the set of recesses is empty/void.

Features disclosed with respect to one recess may also apply to each recess of the set of recesses, unless specified otherwise and unless contradictory.

It may be provided that the first recess set length is e.g. 100 µm or more, or 200 µm or more, or 500 µm or more, or 1 mm or more, or 2 mm or more, or 5 mm or more, or 10 mm or more, or 20 mm or more, or 50 mm or more, or 100 mm or more.

It may be provided that in the cross-sectional top view, the first recess set length extends from one side of the structured electrode to an opposite side of the structured electrode, i.e. the first recess set length may be 100 % of the length from one side of the structured electrode to an opposite side of the structured electrode in the first direction. E.g. the set of recesses may be a global cut. E.g. the recess set length may be longer than/equal to a length of the manipulation electrode in the first/second direction.

It may be provided that the first recess set length is 50 % or more of the length of the structured electrode in the first direction, or 60 % or more, or 70 % or more, or 80 % or more, or 90 % or more, or 95 % or more, or e.g. 100%.

It may be provided that the first area and the second area are separated by the set of recesses. It may be provided that in the cross-sectional top view, the first area and the second area are not connectable by a straight line that is fully located within the structured electrode. It may be provided that in the cross-sectional top view, each straight line between the first area and the second area necessarily passes through at least one recess of the set of recesses.

A straight line that is fully located within the structured electrode e.g. may be considered as a potential coupling path for an oscillating signal, e.g. an MW signal, e.g. the oscillating magnetic field.

It may be provided that in the cross-sectional top view, the portion of the manipulation electrode is fully located on one side of the set of recesses (e.g., on one side in the second direction). It may be provided that in the cross-sectional top view, the set of recesses has a first side and a second side, and that the portion of the manipulation electrode is fully located on the first side. It may be provided that the first area is fully located on the first side of the set of recesses and that the second area is fully located on the second side. It e.g. may be provided that in the cross-sectional top view, the first area and the second area are fully located on different sides of the set of recesses. It may be provided that the first area and the second area do not surround/comprise/embed a recess of the set of recesses. It may be provided that first area and the second area are adjacent to only one respective side of the set of recesses (e.g., to only one side of one recess of the set of recesses and e.g. not adjacent to sides of other recesses of the set of recesses).

It may be provided that in the cross-sectional top view, each recess of the set of recesses is not connectable to the manipulation electrode by a straight line that does not pass through any conductive material.

It may be provided that the portion of the manipulation electrode is configured to provide the oscillating magnetic field at the manipulation area. It may be provided that the portion of the manipulation electrode comprises all areas of the manipulation electrode configured to (e.g. directly) provide the oscillating magnetic field at the manipulation area (and e.g. having a direct line of sight to the manipulation area). A feedline of the manipulation electrode etc. e.g. may be considered to only indirectly provide the oscillating magnetic field. It may be provided that in the cross-sectional top view, the portion of the manipulation electrode comprises all areas of the manipulation electrode that are located in the cross-sectional top view and that are configured to (e.g. directly) provide the oscillating magnetic field at the manipulation area (and e.g. being located below a surface of the manipulation electrode that has a direct line of sight to the manipulation area).

It may be provided that the portion of the manipulation electrode comprises all portions of the manipulation electrode located below the manipulation area, e.g. when viewed from above.

It may be provided that the manipulation electrode is not visible in a top view. It may be provided that the manipulation electrode does not have a direct line of sight to a particle trapped in the particle trap/to the manipulation area.

It may be provided that the portion of the manipulation area comprises at least one winding/turn of the manipulation electrode.

It may be provided that the first area is located below the manipulation area. It may be provided that in a projectional top view of the particle trap apparatus, the first area comprises/embeds/surrounds the manipulation area.

It may be provided that the portion of the manipulation electrode comprises two or more parallel areas of the manipulation electrode, e.g. located next to each other and e.g. conductively connected with each other.

It may be provided that in the cross-sectional top view, the first portion length is the length of a straight edge line of the manipulation electrode extending in the first direction.

It may be provided that the first portion length is e.g. 100 µm or more, or 200 µm or more, or 500 µm or more, or 1 mm or more, or 2 mm or more, or 5 mm or more, or 10 mm or more, or 20 mm or more, or 50 mm or more, or 100 mm or more.

It may be provided that in the cross-sectional top view, the first portion length has a starting point (e.g., the lowest point of the manipulation electrode/portion in the first direction and an endpoint (e.g. the highest point of the manipulation electrode/portion in the first direction). It may be provided that the first portion length is defined by the connecting line of the starting point and the endpoint.

It may be provided that the manipulation electrode comprises a feedline portion that e.g. has no direct line of sight to a particle trapped in the particle trap/to the manipulation area. The portion of the manipulation electrode may be/may comprise the feedline portion of the manipulation electrode, e.g. partially or fully.

The particle trap may comprise the trapping potential. The trapping potential may comprise a radio frequency (RF) trapping potential. Alternatively or in addition, the trapping potential may comprise a direct current (DC) trapping potential.

It may be provided that the particle trap apparatus comprises a plurality of structured electrodes, each of which comprising a set of recesses, respectively. The plurality of structured electrodes may comprise e.g. a structured ground electrode and/or a structured DC electrode and/or a plurality of structured DC electrodes. It may be provided that particle trap apparatus comprises a plurality of structured electrodes, comprising a structured ground electrode and e.g. one or more structured DC electrodes and/or one or more structured RF electrodes.

Features disclosed with respect to one structured electrode may also apply to one or more/each of a plurality of structured electrodes, unless specified otherwise and unless otherwise contradictory.

It may be provided that the DC electrode comprises a DC feedline portion.

The first portion length fully overlapping with the first recess set length when viewed in the second direction may comprise that each point of the first portion length has an overlapping point of the first recess set length when viewed in the second direction.

It may be provided that in the cross-sectional top view, 50% or more of the positions of the first portion length overlap with one or more recesses of the set of recesses when viewed in the second direction. If less than 100% of the positions of the first portion length overlap with one or more recesses of the set of recesses, this may be referred to as "partial overlap".

It may also be provided that 60% or more, or 70% or more, or 80% or more, or 90% or more, or 100% of the positions of the first portion length overlap with one or more recesses of the set of recesses when viewed in the second direction. The 50% or more, or 60% or more, or 70% or more, or 80% or more, or 90% or more, or 100% of the positions of the first portion length do not need to all overlap with the same recess of the set of recesses and may e.g. overlap with different respective recesses of the set of recesses.

It may be provided that 50% or more of the positions of the first portion length (or 60% or more, or 70% or more, or 80% or more, or 90% or more, or 100%) have each one or more recesses of the set of recesses that overlap with the position when viewed in the second direction.

Optionally, it may be provided that in the cross-sectional top view, each position of the first portion length overlaps with one or more recesses of the set of recesses when viewed in the second direction. This may be referred to as "full overlap".

A partial overlap may e.g. allow to provide a conductive connection (e.g., a DC connection) within the cross-sectional top view, and e.g. may avoid the need for providing a conductive connection between the first area and the second area elsewhere. A partial overlap may allow to significantly reduce a potential coupling to the structured electrode, e.g. to the first/second area.

A full overlap may e.g. allow to avoid any coupling to the structured electrode, e.g. to the first/second area.

It may be provided that in the cross-sectional top view, the portion of the manipulation electrode/the first portion length overlaps with one or more recesses of the set of recesses at each position of the portion of the manipulation electrode/of the first portion length when viewed in the second direction. It may be provided that at least one recess of the set of recesses overlaps at each position of the portion of the manipulation electrode when viewed in the second direction. It may not necessarily be the same recess that overlaps with the portion of the manipulation electrode at each respective position of the portion of the manipulation electrode.

It may be provided that in the cross-sectional top view, a plurality of straight lines comprises, for each position of the first portion length, a straight line that passes through said position of the first portion length and that extends in the second direction (e.g. to infinity or to the second area or to the end of the structured electrode). It may be provided that 50% or more, or 60 % or more, or 70 % or more, or 80 % or more, or 90 % or more, or 95 % or more, or 100% of the lines of this plurality of straight lines pass through one or more recesses of the set of recesses. It may be provided that all lines of this plurality of straight lines pass through one or more recesses of the set of recesses.

It may be provided that in the cross-sectional top view, the portion of the manipulation electrode fully overlaps with the set of recesses when viewed in the second direction.

It may be provided that each recess of the set of recesses does not comprise a conductive material of the ground electrode. Optionally, it may be provided that each recess of the set of recesses does not comprise any conductive material.

It may be provided that each recess of the set of recesses does not comprise a conductive material of the structured electrode.

It may be provided that each recess of the set of recesses comprises a dielectric material, e.g. Polyimide, SiO₂, SiN, TEOS (Tetraethylorthosilicate).

It may be provided that in the cross-sectional top view, a length of the longest straight line that is fully located within the structured electrode and that is fully located on the side of the set of recesses where the portion of the manipulation electrode is (e.g. fully) located is less than the distance between two points that are located furthest away from each other within the structured electrode, optionally less than the distance between two points that are located furthest away from each other within the structured electrode divided by the square root of two. Alternatively or in addition, it may be provided that in the cross-sectional top view, a length of the longest straight line that is fully located within the structured electrode and that is adjacent to the portion of the manipulation electrode is less than the distance between two points that are located furthest away from each other within the structured electrode, optionally less than the distance between two points that are located furthest away from each other within the structured electrode divided by the square root of two.

"Line adjacent to the portion of the manipulation electrode" e.g. may comprise that no conductive material is present between a portion of the line and the portion of the manipulation electrode. "Line adjacent to the portion of the manipulation electrode" e.g. may comprise that no recess is present between a portion of the line and the portion of the manipulation electrode.

A straight line that is fully located within the structured electrode e.g. may be considered as a potential coupling path. Structuring the structured electrode/providing the set of recesses in the structured electrode may reduce the maximum length of straight lines that are fully located within the structured electrode. The length of the longest straight line that is fully located within the structured electrode and that e.g. is adjacent to the portion of the manipulation electrode and/or that e.g. is fully located on the side of the set of recesses where the portion of the manipulation electrode is located may be less than the length of the longest straight line that would be fully located within said electrode if the set of recesses would not be present in said electrode. This may reduce the range of modes that can couple to the structured electrode and may prevent the oscillating magnetic field from coupling to the structured electrode, e.g. to its first area and/or to its second area. Structuring the structured electrode/providing the set of recesses in the structured electrode, such that the structured electrode does not fully comprise straight lines (e.g., that are adjacent to the portion of the manipulation electrode and/or that e.g. are fully located on the side of the set of recesses where the portion of the manipulation electrode is located) above a certain length may reduce the range of modes that can couple to the structured electrode and may prevent the oscillating magnetic field from coupling to the structured electrode/to the first area/to the second area. If the length of the straight lines that are adjacent to the portion of the manipulation electrode and/or on the same side of the set of recesses as the portion of the manipulation electrode is limited, this may reduce/prevent coupling from the oscillating magnetic field onto the structured electrode.

The longest straight lines discussed above and below e.g. may be the longest straight lines in the second direction, unless specified otherwise and unless otherwise contradictory. The length of the longest straight lines discussed above and below e.g. may be the length in the second direction, unless specified otherwise and unless otherwise contradictory. The straight lines discussed above and below e.g. may be straight lines in the second direction, unless specified otherwise and unless otherwise contradictory.

It may be provided that, in the cross-sectional top view, the length of the longest straight line that is fully located within the structured electrode (and that e.g. is adjacent to the portion of the manipulation electrode and/or that e.g. is fully located on the side of the set of recesses where the portion of the manipulation electrode is located) is 1/2 or less, or 1/3 or less, or 1/4 or less of a chip length, e.g. the chip length in the second direction. The chip length e.g. may be 10 mm or less. The chip e.g. may have a size of 10 mm x 10 mm or less. The chip length e.g. may be 20 mm or less. The chip e.g. may have a size of 20 mm x 20 mm or less. The chip length e.g. may be 50 mm or less. The chip e.g. may have a size of 50 mm x 50 mm or less. The chip length e.g. may be 100 mm or less. The chip e.g. may have a size of 100 mm x 100 mm or less. The chip e.g. may comprise the particle trap apparatus. The chip e.g. may be/may comprise a multi-layer structure of the particle trap apparatus.

As generally known, the wavelength λ of the oscillating magnetic field in the structured electrode may be calculated by the following formula: $λ = \frac{{c}_{0}}{υ ∗ \sqrt{{ϵ}_{eff}}} ,$ wherein *c*₀ is the speed of light in vacuum, *υ* is the frequency of the oscillating magnetic field and *ε_{eff}* is the effective dielectric constant of the structured electrode/its material. The frequency range of the oscillating magnetic field may comprise the frequencies from 1 MHz to 100 GHz. *ε_{eff}* may be a function of the geometry of the structured electrode and of the material of the structured electrode. E.g., for a coplanar waveguide, *ε_{eff}* may be calculated according to the following formula: ${ϵ}_{eff} = \frac{{ϵ}_{r} + 1}{2} ,$ wherein *εᵣ* is the relative dielectric constant.

E.g., for a microstrip, *ε_{eff}* may be calculated according to the following formulas: For $\left(\frac{W}{H}\right) < 1$, ${ϵ}_{eff} = \frac{{ϵ}_{r} + 1}{2} + \frac{{ϵ}_{r} - 1}{2} \left[{\left(1+12\left(\frac{H}{W}\right)\right)}^{\frac{- 1}{2}}+0.04{\left(1-\left(\frac{W}{H}\right)\right)}^{2}\right] .$

For $\left(\frac{W}{H}\right) \geq 1$, ${ϵ}_{eff} = \frac{{ϵ}_{r} + 1}{2} + \frac{{ϵ}_{r} - 1}{2} {\left(1+12\left(\frac{H}{W}\right)\right)}^{\frac{- 1}{2}} ,$ wherein $\left(\frac{W}{H}\right)$ is the ratio of the width *W* to the height *H* of the microstrip.

The value of *εᵣ* depends on the material of the structured electrode and e.g. may be comprised in the range from 2.1 to 12.9, e.g. for quartz, alumina, aluminum nitride, silicon carbide, sapphire, silicon, gallium nitride, gallium arsenide, Rogers RO4350B or PTFE. *ε_{eff}* e.g. may be comprised in the range from 2 to 13. Accordingly, it may be provided that the length of the longest straight line that is fully located within the structured electrode (and that e.g. is adjacent to the portion of the manipulation electrode and/or that e.g. is fully located on the side of the set of recesses where the portion of the manipulation electrode is located) is 53 m or less (e.g., for *υ* = 1 MHz or less and *ε_{eff}* = 2 or less), or 21 m or less (e.g., for *υ* = 1 MHz or less and *ε_{eff} =* 13 or less), or 53 mm or less (e.g., for *υ* = 1 GHz or less and *ε_{eff}* = 2 or less), or 21 mm or less (e.g., for *υ* = 1 GHz or less and *ε_{eff} =* 13 or less), or 0.53 mm or less (e.g., for *υ* = 100 GHz or less and *ε_{eff}* = 2 or less), or 0.21 mm or less (e.g., for *υ* = 100 GHz or less and *ε_{eff}* = 13 or less).

It may be provided that the length of the longest straight line that is fully located within the structured electrode (and that e.g. is adjacent to the portion of the manipulation electrode and/or that e.g. is fully located on the side of the set of recesses where the portion of the manipulation electrode is located) is **1** mm or less, e.g. with an oscillating magnetic field with a frequency of 37.4741 GHz or less, or 3 mm or less, e.g. with an oscillating magnetic field with a frequency of 12.491 GHz or less, or 5 mm or less, e.g. with an oscillating magnetic field with a frequency of 7.495 GHz or less, or 10 mm or less, e.g. with an oscillating magnetic field with a frequency of 3.747 GHz or less, or 30 mm or less, e.g. with an oscillating magnetic field with a frequency of 1.249 GHz or less, or 50 mm or less, e.g. with an oscillating magnetic field with a frequency of 750 MHz or less, or 100 mm or less, e.g. with an oscillating magnetic field with a frequency of 375 MHz or less, e.g. with *ε_{eff}* = 2 or less.

It may be provided that length of the longest straight line that is fully located within the structured electrode (and that e.g. is adjacent to the portion of the manipulation electrode and/or that e.g. is fully located on the side of the set of recesses where the portion of the manipulation electrode is located) is 1 mm or less, e.g. with an oscillating magnetic field with a frequency of 14.699 GHz or less, or 3 mm or less, e.g. with an oscillating magnetic field with a frequency of 4.900 GHz or less, or 5 mm or less, e.g. with an oscillating magnetic field with a frequency of 2.940 GHz or less, or 10 mm or less, e.g. with an oscillating magnetic field with a frequency of 1.470 GHz or less, or 30 mm or less, e.g. with an oscillating magnetic field with a frequency of 490 MHz or less, or 50 mm or less, e.g. with an oscillating magnetic field with a frequency of 294 MHz or less, or 100 mm or less, e.g. with an oscillating magnetic field with a frequency of 147 MHz or less, e.g. with *ε_{eff} =* 13 or less.

It may be provided that in the cross-sectional top view, a length of the longest straight line that is fully located within the structured electrode (and that e.g. is adjacent to the portion of the manipulation electrode and/or that e.g. is fully located on the side of the set of recesses where the portion of the manipulation electrode is located) is less as compared to a state where the set of recesses is not present in the structured electrode.

It may be provided that in the cross-sectional top view, the length of the longest straight line that is fully located within the structured electrode and that is fully located on the side of the set of recesses where the portion of the manipulation electrode is located is less than 1/4 of the wavelength of the oscillating magnetic field in the structured electrode (or e.g. less than 1/2 of the wavelength). Alternatively or in addition, it may be provided that in the cross-sectional top view, the length of the longest straight line that is fully located within the structured electrode and that is adjacent to the portion of the manipulation electrode is less than 1/4 of the wavelength of the oscillating magnetic field in the structured electrode (or e.g. less than 1/2 of the wavelength).

It may be provided that in the cross-sectional top view and e.g. for each first area fully located on one side of the set of recesses (e.g. located on the "portion-side" of the set of recesses/the side of the set of recesses where the portion of the manipulation electrode is (e.g. fully) located), a length of the longest straight line that is fully located within the first area of the structured electrode is less than the distance between two points that are located furthest away from each other within the structured electrode, optionally less than the distance between two points that are located furthest away from each other within the structured electrode divided by the square root of two.

It may be provided that in the cross-sectional top view, a length of the longest straight line that is fully located within the structured electrode and that is fully located on the side of the set of recesses where the portion of the manipulation electrode is located (e.g. fully) is 50 mm or less (or e.g. 20 mm or less, or e.g. 10 mm or less, or e.g. 5 mm or less, or e.g. 2 mm or less, or e.g. 1 mm or less). Alternatively or in addition, it may be provided that in the cross-sectional top view, a length of the longest straight line that is fully located within the structured electrode and adjacent to the portion of the manipulation electrode is 50 mm or less (or e.g. 20 mm or less, or e.g. 10 mm or less, or e.g. 5 mm or less, or e.g. 2 mm or less, or e.g. 1 mm or less).

It may be provided that in the cross-sectional top view, a distance between the portion of the manipulation electrode and the set of recesses (e.g., the closest recess of the set of recesses) is 50 mm or less (or e.g. 20 mm or less, or e.g. 10 mm or less, or e.g. 5 mm or less, or e.g. 2 mm or less, or e.g. 1 mm or less).

It may be provided that in the cross-sectional top view, for each area fully located on one side of the set of recesses (e.g. each first area fully located on the "portion-side" of the set of recesses/the side of the set of recesses where the portion of the manipulation electrode is located), a length of the longest straight line that is fully located within the area of the structured electrode is 50 mm or less (or e.g. 20 mm or less, or e.g. 10 mm or less, or e.g. 5 mm or less, or e.g. 2 mm or less, or e.g. 1 mm or less).

It may be provided that in the cross-sectional top view, a length of the longest straight line that is fully located within the structured electrode is less than the distance between two points that are located furthest away from each other within the structured electrode. Optionally, it may be provided that in the cross-sectional top view, the length of the longest straight line that is fully located within the structured electrode is less than the distance between two points that are located furthest away from each other within the structured electrode divided by the square root of two. Alternatively or in addition, it may be provided that in the cross-sectional top view, the length of the longest straight line that is fully located within the structured electrode is less than 1/4 of the wavelength of the oscillating magnetic field in the structured electrode (or e.g. less than 1/2 of the wavelength). Alternatively or in addition, it may be provided that in the cross-sectional top view, the length of the longest straight line that is fully located within the structured electrode is 50 mm or less (or e.g. 20 mm or less, or e.g. 10 mm or less, or e.g. 5 mm or less, or e.g. 2 mm or less, or e.g. 1 mm or less).

It may be provided that in the cross-sectional top view, the first area and the second area are conductively connected. Alternatively, it may be provided that in the cross-sectional top view, the first area and the second area are not conductively connected.

Having a conductive connection between the first area and the second area in the cross-sectional top view may remove the need for providing a conductive connection elsewhere and may thus be favorable in terms of integration, upscaling and manufacturing.

Having no conductive connection between the first area and the second area in the cross-sectional top view may allow to prevent a coupling between both areas in the cross-sectional top view particularly well, and e.g. may allow to ensure that potential coupling paths between both areas are cut by the set of recesses.

In the cross-sectional top view, the first area and the second area may be conductively connected by the structured electrode (e.g., a connecting portion thereof), e.g. the recess(es) of the set of recesses may be (a) partial recess(es). It may be provided that a conductive connection between the first area and the second area is located in the same plane/layer as the set of recesses.

If in the cross-sectional top view, the first area and the second area are not conductively connected, the recess(es) of the set of recesses e.g. may be (a) full recess(es).

It may be provided that a conductive connection between the first area and the second area is located in a different plane/layer as the set of recesses, and e.g. not located in the same plane/layer as the set of recesses.

It may be provided that the conductive connection in the cross-sectional top view is a DC connection, and that the conductive connection e.g. does not provide an AC/RF/MW connection, e.g. no connection above a certain frequency.

It may be provided that the particle trap apparatus comprises a multi-layer structure comprising a first layer and a second layer. It may be provided that the first layer comprises the structured electrode.

It may be provided that the first layer e.g. comprises the set of recesses, the first area, the second area and the portion of the manipulation electrode. It e.g. may be provided that the cross-sectional top view is a cross-sectional top view of the first layer.

It may be provided that the first layer is a top layer, e.g. with a direct line of sight to a particle trapped in the particle trap/the trapping potential of the particle trap. It may be provided that the first layer is a bottom layer/buried layer, e.g. without direct line of sight to a particle trapped in the particle trap. It may be provided that the second layer is below the first layer. It may be provided that the second layer is e.g. a connection/routing/wiring layer. It may be provided that the second layer is above the first layer, e.g. the first layer/structured electrode may be buried.

It may be provided that the ground electrode, the manipulation electrode and optionally the set of trapping electrodes are comprised in the first layer of the multi-layer structure, and/or in the second layer of the multi-layer structure.

It may be provided that the particle trap apparatus comprises one or more additional layers between the first layer and the second layer.

It may be provided that the first layer comprises the set of recesses. Alternatively or in addition, it may be provided that the second layer comprises the set of recesses.

It may be provided that in the cross-sectional top view, the first area and the second area are not conductively connected. It may be provided that the first area and the second area are conductively connected via the multi-layer structure, e.g. to an overall electrical ground of the particle trap apparatus/of the multi-layer structure (e.g., if the structured electrode is a structured ground electrode). Alternatively or in addition, it may be provided that the first area and the second area are conductively connected outside of the multi-layer structure, e.g. to the overall electrical ground of the particle trap apparatus/of the multi-layer structure (e.g., if the structured electrode is a structured ground electrode).

It e.g. may be provided that the first area and the second area are conductively connected via the second layer of the multi-layer structure, or e.g. via a third layer of the multi-layer structure.

It may be provided that outside of the multi-layer structure, the first area and the second area are conductively connected, e.g. to the electrical ground, e.g., via a wire-bond and/or via a PCB (printed circuit broad), e.g. connected to/providing the overall electrical ground of the particle trap apparatus, and/or via additional components. The additional components e.g. may provide low-pass filtering, reducing/avoiding any potential RF/MW coupling further. The particle trap apparatus e.g. may comprise a PCB, and e.g. a plurality of multi-layer structures, comprising respective sets of trapping electrodes, e.g. may be located on the PCB.

The properties of the set of recesses may affect the coupling characteristics between the first area and the second area, e.g. for different modes. It may be provided that the first area and the second area are connected DC-wise but e.g. not connected AC/RF/MW-wise (e.g., not connected above a certain frequency). This may e.g. allow to modify how a signal couples through the structured electrode and/or to force eddy currents arising from coupling to specific ways of the structured electrode and/or to control the general behavior of a current flow.

Conductively connecting the first area and the second area via the second layer e.g. may allow for better integration of complex electrode designs and of passive components, easy manufacturing and a higher scalability. The connection may be realized e.g. by means of vias between the first layer and the second layer.

It may be provided that in the cross-sectional top view, the structured electrode comprises a plurality of areas comprising the first area and the second area (and e.g. one or more additional areas). It may be provided that in the cross-sectional top view, the structured electrode comprises, for each pair of areas of the plurality of areas, a respective set of recesses, wherein each recess of the respective set of recesses is located between the respective pair of areas. It may be provided that in the cross-sectional top view, a pair of the plurality of areas is conductively connected. Alternatively or in addition, it may be provided that in the cross-sectional top view, a pair of the plurality of areas (e.g. another pair) is not conductively connected and is conductively connected via the multi-layer structure (e.g., via the second layer or via a third layer of the multi-layer structure). Alternatively or in addition, it may be provided that in the cross-sectional top view, a pair of the plurality of areas (e.g., yet another pair) is not conductively connected and is conductively connected outside of the multi-layer structure.

This may allow for a high flexibility and variability of connecting different areas with each other. The different types of connection (e.g., inside the cross-sectional top view, outside of this view but inside of the multi-layer structured, outside of the multi-layer structure) may be selected e.g. based on coupling simulations. Having a conductive connection inside the cross-sectional top view may provide the most direct conductive connection. Connecting via the multi-layer and e.g. having no conductive connection in the cross-sectional top view e.g. may allow to avoid/reduce coupling between the areas particularly well. Connecting outside of the multi-layer structure e.g. may allow to introduce additional components, e.g. such as filters.

Varying the connection type and/or the connection may vary a conductive path between the corresponding areas and may therefore vary, e.g. increase or reduce, the coupling between the corresponding areas and/or the coupling to ground (e.g., to an overall electrical ground).

It may be provided that the structured electrode comprises a plurality of sets of recesses, respectively comprising one or more recesses.

It may be provided that the structured electrode comprises, for each set of recesses, a pair of areas, the respective set of recesses being located between the respective pair of areas.

It may be provided that respective sets of recesses are also (e.g. partly) identical/comprise identical recesses.

It may be provided that the structured electrode/the plurality of areas comprises more than two areas, e.g. a third area and optionally a fourth area and optionally a fifth area ... in addition to the first area and the second area.

It may also be provided that some pairs of areas are connected with each other within the multi-layer structure and some other pairs of areas are connected outside of the multi-layer structure.

It may be provided that the set of recesses comprises a plurality of recesses. Optionally, it may be provided that in the cross-sectional top view, recesses of the set of recesses overlap when viewed in the second direction.

It may be provided that recesses of the set of recesses are periodically arranged. The recesses of the set of recesses may have the same shape and/or dimension. The recesses of the set of recesses may have a different shape and/or dimension.

It may be provided that recesses of the set of recesses overlap in the first direction and/or in the second direction. The overlapping recesses may allow a DC conductive connection between the first area and the second area but e.g. may prevent AC/MW (and e.g. also RF) coupling to the first area/second area/structured electrode.

It may be provided that the set of recesses comprises parallel rows of recesses (e.g., a first row and a second row). The rows may be shifted with respect to each other, e.g. in the row direction, which e.g. may be the first direction. The recesses (of the first row) may (partially) overlap with other recesses (from the second row) when viewed in a direction orthogonal to the row direction, e.g. when viewed in the second direction.

It may be provided that the distance between two neighboring recesses, e.g. neighboring in the first direction, is less as compared to a length of either of the two neighboring recesses in the first direction. Such an implementation may allow to provide an overlap between recesses of the set of recesses and the first portion length along each position of the first portion length, when viewed in the second direction, e.g. with only two rows of recesses. It may be provided that the distance between two neighboring recesses, e.g. neighboring in the second direction, is less as compared to a length of either of the two neighboring recesses in the second direction. In other words: The two neighboring recesses may be close to each other in the first direction and/or in the second direction, which may allow to suppress a potential coupling.

It may be provided that in the cross-sectional top view, e.g. 50% or more (or 60% or more, or 70% or more, or 80% or more, or 90% or more, or 100%) of the positions of the first portion length overlap with two or more recesses of the set of recesses when viewed in the second direction.

It may be provided that in the cross-sectional top view, each recess of the set of recesses overlaps at least partly with another one of the set of recesses when viewed in the second direction.

It may be provided that the plurality of recesses comprises a first recess and a second recess. The first recess may have a major axis in the first direction. The first recess may have a major axis that is orthogonal to the first direction. A connection line between the geometric center of the first recess and the geometric center of the second recess may be in the first direction. It may be provided that the first recess and the second recess overlap when viewed in the second direction. It may be provided that the first recess and the second recess are located above each other in the first direction.

It may be provided that in the cross-sectional top view, recesses of the set of recesses do not overlap when viewed in the first direction. Alternatively, it may be provided that, in the cross-sectional top view, recesses of the set of recesses overlap when viewed in the first direction.

It may be provided that each connection line in the second direction between two opposite sides of the structured electrode passes through either the first recess or the second recess or both recesses/a recess of the set of recesses.

It may be provided that e.g. 50% or more, or 60% or more, or 70% or more, or 80% or more, or 90% or more of the connection lines in the second direction between two opposite sides of the structured electrode pass through a recess of the set of recesses.

It may be provided that in the cross-sectional top view, a first recess of the set of recesses extends from a first outer side of the structured electrode, e.g. towards the inside of the structured electrode, e.g. in the first direction. It may be provided that in the cross-sectional top view, a second recess of the set of recesses extends from a second outer side of the structured electrode, e.g. towards the inside of the structured electrode. It e.g. may be provided that in the cross-sectional top view, the first outer side and the second outer side of the structured electrode are opposite to each other. It e.g. may be provided that in the cross-sectional top view, the first recess and the second recess overlap at least partially, e.g. when seen from a side orthogonal to the first or the second side, e.g. when seen in the second direction.

The overlapping recesses/set of recesses/recess of the set of recesses may be considered as to break the longest straight line/coupling path that would be fully located within the electrode if it would be unstructured/if it would not comprise the set of recesses.

The particle trap apparatus may comprise a second manipulation electrode portion.

It may be provided that the manipulation electrode comprises a second portion. Alternatively, it may be provided that the particle trap apparatus comprises a second manipulation electrode comprising a second portion. It may be provided that in the cross-sectional top view, the second area is adjacent to one or more recesses of the set of recesses. It may be provided that in the cross-sectional top view, the second area is adjacent to the second portion. It may be provided that the second portion extends along a second portion length in the first direction. It may be provided that the first recess set length is longer than the second portion length. It may be provided that the second portion length fully overlaps with the first recess set length when viewed in the second direction.

The second manipulation electrode e.g. may be configured to provide a second oscillating magnetic field, the second oscillating magnetic field being configured to perform a quantum operation on a particle trapped in the particle trap, at a second manipulation area of the particle trap apparatus. Features disclosed with respect to the manipulation electrode may also apply to the second manipulation electrode as appropriate, unless otherwise specified or unless contradictory.

Having the set of recesses between the first area (adjacent to the portion of the manipulation electrode, which may be referred to as "first portion") and the second area (adjacent to the second portion) may allow to prevent coupling between the (first) portion/manipulation electrode and the second portion/second manipulation electrode. It may further allow to prevent coupling between the second portion/manipulation electrode and the structured electrode. This may improve the scalability. It may also reduce/prevent crosstalk between the first portion and the second portion/between the corresponding manipulation areas.

It may be provided that the particle trap apparatus comprises a plurality of manipulation electrodes and/or a plurality of manipulation areas. E.g., one manipulation electrode may be configured to provide a plurality of manipulation areas. Each of the plurality of manipulation electrodes may be configured to provide one/more manipulation areas, respectively.

It may be provided that the particle trap apparatus comprises N manipulation areas and N portions of manipulation electrodes/N manipulation electrodes, N being a natural number, e.g. larger than one or two or ten. It may be provided that each portion/manipulation electrode has an adjacent area of the structured electrode, and that each pair of such areas has a corresponding set of recesses located between the pair of areas.

It may be provided that the particle trap apparatus comprises two manipulation areas comprising the (first) manipulation area above the portion of the manipulation electrode and a second manipulation area above the second portion of the manipulation electrode or the second manipulation electrode.

It may be provided that the second area extends from the second manipulation electrode to one or more/each recess of the set of recesses.

It may be provided that in a projectional top view, the set of recesses is located between two manipulation areas, e.g. between the first manipulation area and the second manipulation area. It may be provided that in the cross-sectional top view, the set of recesses is located between the two manipulation electrodes/the two portions of the manipulation electrodes.

It may be provided that in the cross-sectional top view, the second portion length is less/more than the first portion length. The second portion length may be equal to the first portion length.

It may be provided that the set of recesses is located between the manipulation areas. The set of recesses e.g. may be located between the manipulation area and another area of the structured area that e.g. comprises another particle trap (e.g. a storage trap or a junction).

It may also be provided that the second area is not adjacent to a manipulation electrode/a portion of a manipulation electrode. E.g., it may be provided that the particle trap apparatus comprises only one manipulation electrode/manipulation electrode portion. E.g., the second area may extend from e.g. one or more/all recesses of the first set of recesses to one or more/all recesses of a second set of recesses, and the second set of recesses may be between the second area and a third area, the third area being adjacent to another portion of the manipulation electrode/another manipulation electrode.

The set of trapping electrodes may comprise a set of RF electrodes. The trapping potential may comprise an RF trapping potential. The set of RF electrodes may be configured to provide the RF trapping potential. Alternatively or in addition, the set of trapping electrodes may comprise a set of DC electrodes. The trapping potential may comprise a DC trapping potential. The set of DC electrodes may be configured to provide the DC trapping potential. E.g., the set of trapping electrodes may comprise the set of RF electrodes and the set of DC electrodes and the trapping potential may comprise the RF potential and the DC potential.

The set of RF electrodes may comprise one RF electrode or a plurality of RF electrodes. The set of DC electrodes may comprise one DC electrode or a plurality of DC electrodes.

The RF trapping potential e.g. may have a frequency of 1 MHz or more. An RF signal of one electrode of the RF electrode set e.g. may have a frequency of 1 MHz or more.

The set of RF electrodes may be configured to provide the RF trapping potential when corresponding RF voltages are applied to the set of RF electrodes. The set of DC electrodes may be configured to provide the DC trapping potential when corresponding DC voltages are applied to the set of DC electrodes. It may be provided that only voltages and e.g. no currents are applied to the set of RF/DC electrodes.

The shape of the trapping electrodes, e.g. the RF/DC electrodes, and the shape of the ground electrode is not particularly limited. E.g., one of the DC electrodes may have a U-shape.

It may be provided that the structured electrode is a structured DC electrode. It may be provided that the structured electrode is a structured RF electrode.

According to a second aspect of the present disclosure, a method of operating the particle trap apparatus according to the first aspect is provided. The method comprises providing, by the set of trapping electrodes, the trapping potential of the particle trap. The method comprises trapping a particle in the trapping potential of the particle trap. The method comprises providing, by the manipulation electrode, the oscillating magnetic field. The method comprises performing, by the oscillating magnetic field, a quantum operation on the trapped particle. Optionally, the oscillating magnetic field has a wavelength in the structured electrode, and the length of the longest straight line that is fully located within the structured electrode and adjacent to the portion of the manipulation electrode is less than 1/4 of the wavelength.

According to a third aspect of the present disclosure, a method of producing a particle trap apparatus is provided. The method comprises providing a ground electrode. The ground electrode is configured to provide an electrical ground. The method further comprises providing a set of trapping electrodes. The set of trapping electrodes is configured to provide a trapping potential of a particle trap. The method further comprises providing a manipulation electrode. The manipulation electrode is configured to provide an oscillating magnetic field. The oscillating magnetic field is configured to perform a quantum operation on a particle trapped in the particle trap at a manipulation area of the particle trap apparatus. The ground electrode and/or one of the set of trapping electrodes is a structured electrode. In a cross-sectional top view, the structured electrode comprises a first area, a second area and a set of recesses. The first area is adjacent to a portion of the manipulation electrode. The first area is adjacent to one or more recesses of the set of recesses. Each recess of the set of recesses is located between the first area and the second area. Each recess of the set of recesses does not comprise a conductive material of any electrode of the set of trapping electrodes and of the manipulation electrode. In the cross-sectional top view, the portion of the manipulation electrode extends along a first portion length in a first direction. In the cross-sectional top view, the set of recesses extends along a first recess set length in the first direction. In the cross-sectional top view, the first recess set length is at least as long (or e.g. longer) as the first portion length. In the cross-sectional top view, the first portion length fully overlaps with the first recess set length when viewed in a second direction orthogonal to the first direction.

Providing the set of trapping electrodes and the ground electrode may comprise: Providing the set of recesses to the structured electrode such that a coupling of an oscillating field (e.g., of the RF trapping potential and/or of the oscillating magnetic field of the manipulation electrode) onto the structured electrode is reduced, e.g. at least by a factor of 2. Providing the set of trapping electrodes and the ground electrode may comprise: Providing the set of recesses to the structured electrode such that the length of the longest straight line that is fully located within the structured electrode and adjacent to the portion of the manipulation electrode is less than 1/4 of the wavelength.

In the present disclosure, the term "DC" refers to "direct current/voltage", unless otherwise specified or unless contradictory. In the present disclosure, the term "AC" refers to "alternating current/voltage", unless otherwise specified or unless contradictory. In the present disclosure, the term "RF" refers to "radio frequency", unless otherwise specified or unless contradictory. In the present disclosure, the term "MW" refers to "microwave", unless otherwise specified or unless contradictory.

In the present disclosure, the term "trapping potential null" may be used as an abbreviation of "null position of the trapping potential". In the present disclosure, the term "RF null" may be used as an abbreviation of "null position of the RF potential".

All technical implementation details, features and advantages described with respect to the first aspect of the present disclosure are self-evidently mutatis mutandis applicable for the second aspect and the third aspect of the present disclosure and vice versa.

### BRIEF DESCRIPTION OF THE FIGURES

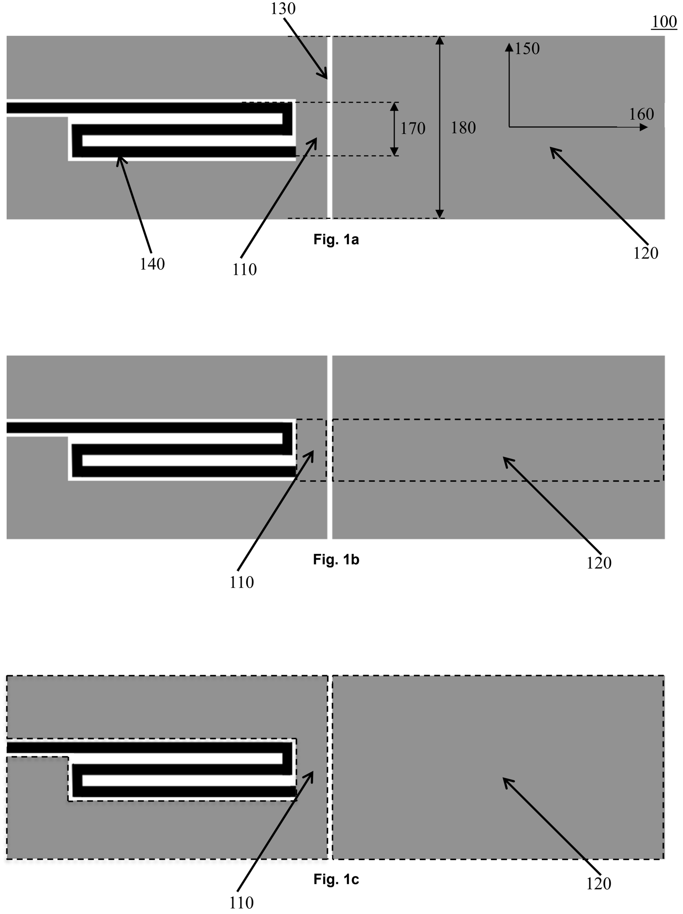

Reference will now be made to exemplary embodiments of the present disclosure, examples of which are illustrated in the accompanying drawings. Wherever possible, the same or like reference numbers are used throughout the drawings to refer to the same or like parts. Moreover, features explained in context of a specific embodiment, for example that one of Fig. 1a, may also apply to any one of the other embodiments, when appropriate, unless stated otherwise and unless contradictory.
- Figs. 1a-9: show cross-sectional top views of a particle trap apparatus according to embodiments of the present disclosure.
- Fig. 10a: shows a cross-sectional top view of a particle trap apparatus according to embodiments of the present disclosure.
- Fig. 10b: is a schematic drawing of conductive connections of different areas of the structured electrode of Fig. 10a.
- Fig. 11a: shows a cross-sectional top view of a particle trap apparatus according to embodiments of the present disclosure.
- Fig. 11b: is a schematic drawing of conductive connections of different areas of the structured electrode of Fig. 11a.
- Fig. 12: shows a cross-sectional top view of a particle trap apparatus according to embodiments of the present disclosure.
- Fig. 13: illustrates a method of producing a particle trap apparatus according to embodiments of the present disclosure.
- Fig. 14: illustrates a method of operating a particle trap apparatus according to embodiments of the present disclosure.

### DESCRIPTION OF EMBODIMENTS

In the figures, areas with the same color/shading/hatching may generally be understood as indicating same or similar components.

Fig. 1a shows a cross-sectional top view of a particle trap apparatus 100 according to embodiments of the present disclosure. The particle trap apparatus 100 comprises a set of trapping electrodes (not shown), a ground electrode (dark gray) and a manipulation electrode (black) comprising a portion 140. The manipulation electrode 140 is depicted as a meander-shaped electrode, but other electrode geometries may also be used for the manipulation electrode. The set of trapping electrodes e.g. may be comprised in the layer of the cross-sectional top view of Fig. 1a and/or e.g. in another layer. In Fig. 1a, the ground electrode is a structured electrode. It may also be provided that one of the set of trapping electrodes is a structured electrode, e.g. alternatively or in addition to the ground electrode being a structured electrode. In the cross-sectional top view of Fig. 1a, the structured electrode comprises a first area 110, a second area 120 and a set of recesses 130. In the embodiment of Fig. 1a, the set of recesses 130 comprises a single recess, but the set of recesses may also comprise a plurality of recesses. The first area 110 is adjacent to the portion of the manipulation electrode and adjacent to one or more recesses of the set of recesses. Each recess of the set of recesses 130 is located between the first area 110 and the second area 120. The first area 110 may e.g. comprise the entire portion of the structured electrode that is on the same side of the set of recesses as the portion of the manipulation electrode (here, the left side of the set of recesses 130) or e.g. a partial portion of it. E.g., the first area 110 may be U-shaped and located around the portion 140 of the manipulation electrode. Each recess of the set of recesses 130 does not comprise a conductive material of any electrode of the set of trapping electrodes and of the manipulation electrode. It may be provided that each recess of the set of recesses 130 does not comprise any conductive material. In Fig. 1a, the portion 140 of the manipulation electrode is embedded in/surrounded by the structured electrode, e.g. by the first area 110. The portion 140 of the manipulation electrode extends along the first portion length 170 in the first direction 150. The set of recesses 130 extends along the first recess set length 180 in the first direction 150, in Fig. 1a from the lower side of the structured electrode to the opposite side, i.e. the upper side, of the structured electrode. In Fig. 1a, the first recess set length 180 is longer than the first portion length 170. The first portion length 170 fully overlaps with the first recess set length 180 when viewed in a second direction 160, which is orthogonal to the first direction 150. The first portion length 170 overlaps on each position of the first portion length 170 with the set of recesses 130 when viewed in the second direction 160. In the cross-sectional top view of Fig. 1a, the length of the longest straight line that is fully located within the structured electrode is less than the distance between two points that are located furthest away from each other within the structured electrode. In the cross-sectional top view of Fig. 1a, the length in the second direction of the longest straight line that is fully located within the structured electrode is less than the distance in the second direction between two points that are located furthest away from each other within the structured electrode. In the cross-sectional top view of Fig. 1a, the length of the longest straight line that is fully located within the first area 110 of the structured electrode is less than the distance between two points that are located furthest away from each other within the structured electrode. The first area 110 and the second area 120 are not conductively connected within the cross-sectional top view of Fig. 1a.

In Fig. 1a, the portion 140 of the manipulation electrode is conductively connected to the ground electrode. It may be provided that one end of the manipulation electrode is connected to the ground electrode and e.g. the other end of the manipulation electrode is conductively connected to a feedline. The manipulation electrode being conductively connected to the ground electrode e.g. may be configured to implement a traveling wave structure.

It may also be provided that the manipulation electrode is not conductively connected to the ground electrode (not shown in Fig. 1a). E.g., one end of the manipulation electrode may be connected to a feedline, e.g. via the second layer. The manipulation electrode not being conductively connected to the ground electrode e.g. may be configured to implement a (resonant) standing wave structure.

Figs. 1band 1c show the particle trap apparatus of Fig. 1a. In both figures, the first area 110 and the second area 120 are selected differently and are indicated by the dashed lines. There is generally freedom in choosing the first/second area as long as these areas have the described properties. The first area and the second area may be chosen differently to the first area and the second area shown in Figs. 1a-c. E.g. the first area may have a U-shape surrounding the portion 140 of the manipulation electrode.

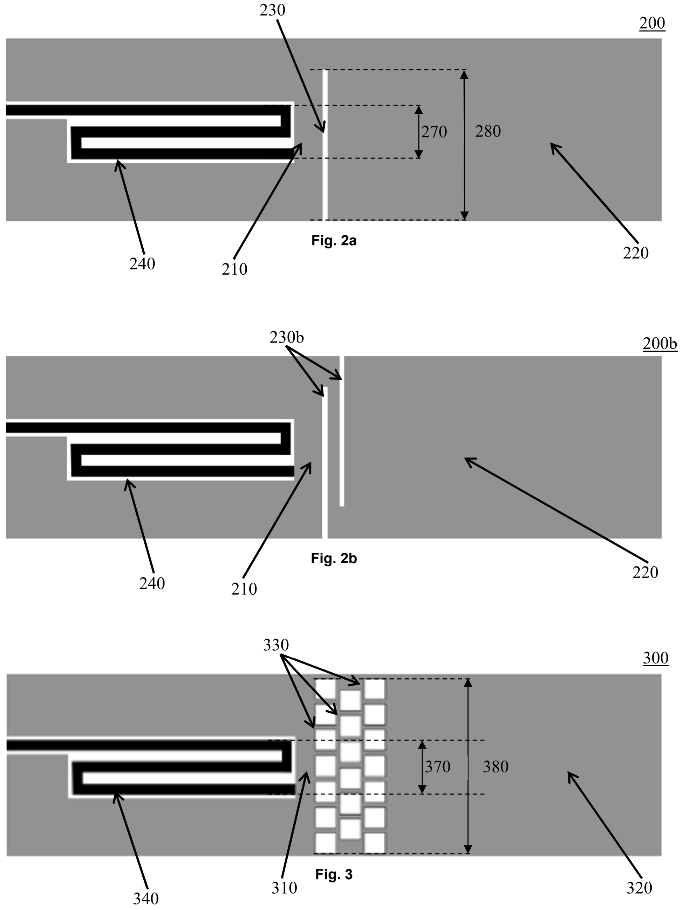

Fig. 2a shows a cross-sectional top view of a particle trap apparatus 200 according to embodiments of the present disclosure. Fig. 2a is generally similar to Fig. 1a. The particle trap apparatus 200 comprises a set of trapping electrodes (not shown), a ground electrode (dark gray) and a manipulation electrode (black) comprising a portion 240. In the cross-sectional top view, the structured electrode comprises a first area 210, a second area 220 and a set of recesses 230. The portion 240 of the manipulation electrode extends along the first portion length 270 in the first direction. The set of recesses 230, which in Fig. 2a comprises a single recess, extends from one side of the structured electrode along the first recess set length 280 in the first direction, not fully to the other side of the structured electrode. In Fig. 2a, the first recess set length 280 is longer than the first portion length 270. The first portion length 270 fully overlaps with the first recess set length when viewed in the second direction. The first portion length 270 overlaps on each position of the first portion length 270 with the set of recesses 230 when viewed in the second direction 260. In the cross-sectional top view of Fig. 2a, the first area 210 and the second area 220 are conductively connected.

Fig. 2b shows a cross-sectional top view of particle trap apparatus 200b according to embodiments of the present disclosure. Fig. 2b is generally similar to Fig. 2a. In the cross-sectional top view of Fig. 2b, the set of recesses 230a comprises two recesses. The two recesses of the set of recesses extend from opposite sides of the structured electrode along the first recess set length 280 in the first direction towards the respective other side of the structured electrode. The two recesses of the set of recesses 230 overlap when viewed in the second direction. Fig. 2b shows two recesses but the set of recesses may e.g. also comprise further recesses in addition. The recesses of the set of recesses do not overlap when viewed in the first direction.

Fig. 3 shows a cross-sectional top view of a particle trap apparatus 300 according to embodiments of the present disclosure. Fig. 3 is generally similar to the figures described above. The particle trap apparatus 300 comprises a set of trapping electrodes (not shown), a ground electrode (dark gray) and a manipulation electrode (black) comprising a portion 340. In the cross-sectional top view of Fig. 3, the structured electrode comprises a first area 310, a second area 320 and a set of recesses 330. In the embodiment of Fig. 3, the set of recesses 330 comprises a plurality of recesses. Each recess of the set of recesses 330 is located between the first area 310 and the second area 320. The portion 340 of the manipulation electrode extends along the first portion length 370 in the first direction. The set of recesses 330 extends along a first recess set length 370 in the first direction. In Fig. 3, each recess of the set of recesses 330 has a rectangular/square shape, but the recesses may also have other shapes. In the cross-sectional top view of Fig. 3, recesses of the set of recesses 330 overlap when viewed in the second direction. The first recess set length 380 is longer than the first portion length 370. The first portion length 370 fully overlaps with the first recess set length 380 when viewed in the second direction. The first area 310 and the second area 320 are conductively connected in the cross-sectional top view of Fig. 3.

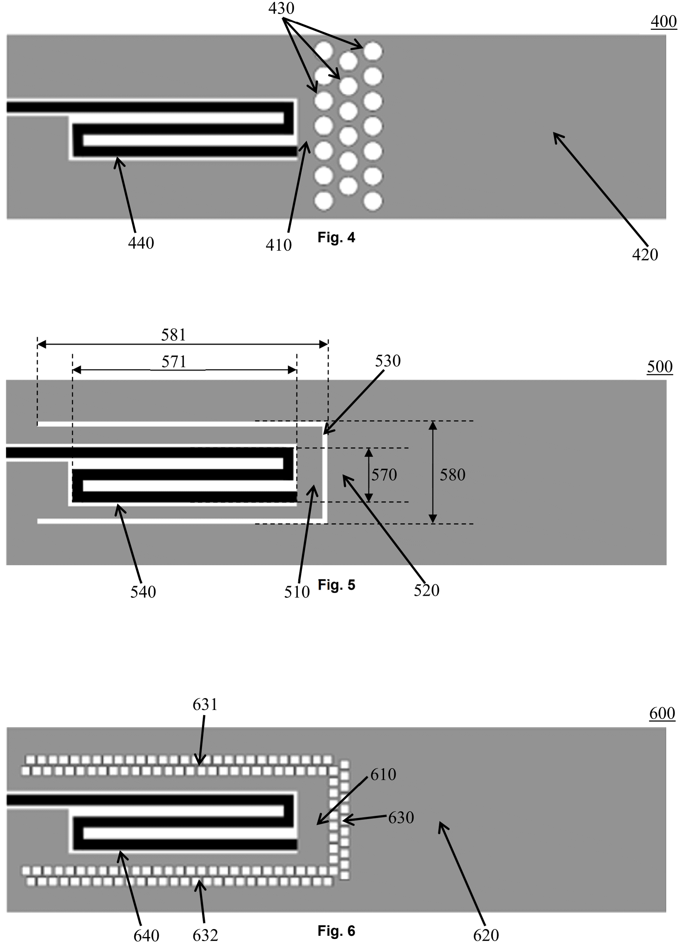

Fig. 4 shows a cross-sectional top view of a particle trap apparatus 400 according to embodiments of the present disclosure. Fig. 4 is generally similar to Fig. . The particle trap apparatus 400 comprises a set of trapping electrodes (not shown), a ground electrode (dark gray) and a manipulation electrode (black), comprising a portion 440. The structured electrode comprises a first area 410, a second area 420 and a set of recesses 430. In the embodiment of Fig. 4, the set of recesses 430 comprises a plurality of recesses. Each recess of the set of recesses 430 is located between the first area 410 and the second area 420. In Fig. 4, each recess of the set of recesses 430 has a circular shape. The recesses of the set of recesses 430 may also have other shape, e.g. square, quadrilateral, rectangular/square and/or triangular. In the cross-sectional top view of Fig. 4, recesses of the set of recesses 440 overlap when viewed in the second direction. The first area 410 and the second area 420 are conductively connected in the cross-sectional top view of Fig. 4.

Fig. 5 shows a cross-sectional top view of a particle trap apparatus 500 according to embodiments of the present disclosure. Fig. 5 is generally similar to Fig. 1a and Fig. 2a. The particle trap apparatus 500 comprises a set of trapping electrodes (not shown), a ground electrode (dark gray) and a manipulation electrode (black), comprising a portion 540. In the cross-sectional top view of Fig. 5, the structured electrode comprises a first area 510, a second area 520 and a set of recesses 530. Each recess of the set of recesses 530 is located between the first area 510 and the second area 520. The first area 510 may be U-shaped and located around the portion 140 of the manipulation electrode. The first area 510 may be a partial portion of the U-shaped area located around the portion 140 of the manipulation electrode. The portion 540 of the manipulation electrode extends in a first direction over the first portion length 570. The set of recesses 530 extends along a first recess set length 570 in the first direction. The set of recesses 530 comprises a single U-shaped recess located around the first area 510 and partly surrounding the portion 540 of the manipulation electrode. In the cross-sectional top view of Fig. 5, the first recess set length 580 is longer than the first portion length 570. The first portion length 570 fully overlaps with the first recess set length 580 when viewed in the second direction. The first portion length 570 overlaps on each position of the first portion length 570 with the set of recesses 530 when viewed in the second direction. The first area 510 and the second area 520 are conductively connected in the cross-sectional top view of Fig. 5.

The portion 540 of the manipulation electrode also extends in the second direction over a length 571. The set of recesses 530 also extends along a length 581 in the second direction. The length 581 is longer than the length 571. The length 571 fully overlaps with the length 581 when viewed in the first direction. The length 571 overlaps on each position of the length 571 with the set of recesses 530 when viewed in the first direction.

Fig. 6 shows a cross-sectional top view of a particle trap apparatus 600 according to embodiments of the present disclosure. Fig. 6 is generally similar to Fig. 3 and 5. The particle trap apparatus 600 comprises a set of trapping electrodes (not shown), a ground electrode (dark gray) and a manipulation electrode (black) comprising a portion 640. In the embodiment of Fig. 6, the set of recesses 630 comprises a plurality of recesses. Each recess of the set of recesses 630 has a rectangular/square shape, but the recesses may also have other shapes. Each recess of the set of recesses 630 is located between the first area 610 and the second area 620. In the cross-sectional top view of Fig, 6, recesses of the set of recesses 630 partially overlap when viewed in the first direction and when viewed in the second direction. The portion 640 of the manipulation electrode extends in a first direction over the first portion length and in a second direction over the second portion length. The first area 610 and the second area 620 are conductively connected in the cross-sectional top view of Fig. 6.

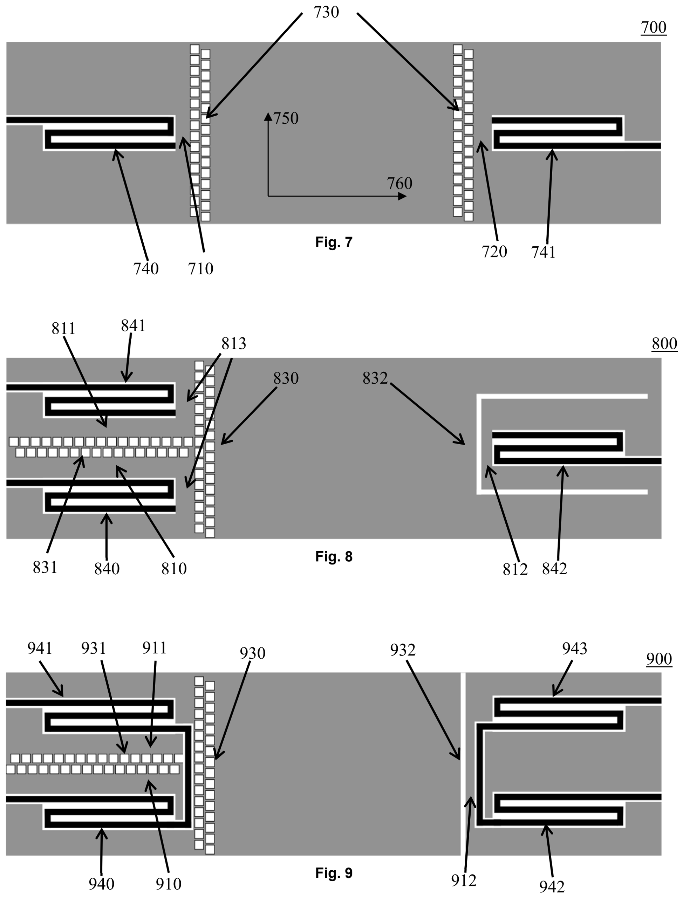

Fig. 7 shows a cross-sectional top view of a particle trap apparatus 700 according to embodiments of the present disclosure. Fig. 7 is generally similar to Fig. 3. The particle trap apparatus 700 comprises a set of trapping electrodes (not shown), a ground electrode (dark gray) and a manipulation electrode comprising a portion 740 and comprising a second portion 741 (it may also be provided that the second portion 741 is not comprised in the manipulation electrode but comprised in a second manipulation electrode). The set of trapping electrodes e.g. may be comprised in the layer of the cross-sectional top view of Fig. 7 and/or e.g. in another layer. In Fig. 7, the ground electrode is a structured electrode. In the cross-sectional top view of Fig. 7, the structured electrode comprises a first area 710, a second area 720 and a set of recesses 730. The first area 710 is adjacent to the first portion 740 of the manipulation electrode and adjacent to one or more recesses of the set of recesses 730. The second area 720 is adjacent to the second portion 741 and adjacent to one or more recesses of the set of recesses 730. The first portion 740 of the manipulation electrode extends along a first portion length in the first direction 750. The second portion 741 extends along a second portion length in the first direction 750. The first portion 740 of the manipulation electrode and the second portion 741 are each connected to the ground electrode. Apart from the connection to the ground electrode, the cross-sectional top view of Fig. 7 does not comprise a conductive connection between the first portion 740 of the manipulation electrode and the second portion 741. The first portion 740 of the manipulation electrode and the second portion 741 may be connected outside of the cross-sectional top view of Fig. 7, e.g. if the second portion is comprised in the manipulation electrode. Fig. 7 shows a configuration where the first portion length and the second portion length are identical and fully overlap with each other when viewed in the second direction, but these lengths may also be different and e.g. may also not fully overlap. The set of recesses 730 extends over a first recess set length in the first direction 750. The set of recesses comprises a plurality of recesses. Each recess of the set of recesses 730 has a rectangular/square shape, but the recesses may also have other shapes. The recesses of the set of recesses 730 overlap when viewed in the second direction 760. The first recess set length is longer than the first portion length and the first recess set length is longer than the second portion length. The first portion length fully overlaps with the first recess set length when viewed in the second direction 760. The second portion length fully overlaps with the first recess set length when viewed in the second direction 760. The first area 710 and the second area 720 are conductively connected in the cross-sectional top view of Fig. 7.

Fig. 8 shows a cross-sectional top view of a particle trap apparatus 800 according to embodiments of the present disclosure. Fig. 8 is generally similar to Fig. 7 and Fig. 5. The particle trap apparatus 800 comprises a set of trapping electrodes (not shown), a ground electrode (dark gray) and a manipulation electrode comprising a portion 840. In the cross-sectional top view of Fig. 8, the structured electrode comprises a plurality of areas comprising a first area 810, a second area 811 and a third area 812. Furthermore, the structured electrode comprises a first set of recesses 830, a second set of recesses 831 and a third set of recesses 832. Fig. 8 also shows the portion 840 of the manipulation electrode, denoted as "first portion" in the following, another portion 841 of a manipulation electrode, denoted as "second portion" in the following, and yet another portion 842 of a manipulation electrode, denoted as "third portion" in the following. The second portion 841 and/or the third portion 842 may be a portion of the manipulation electrode. Alternatively, the particle trap apparatus may comprise a second and/or a third manipulation electrode, in addition to the manipulation electrode, and the second portion 841 may be a portion of the second manipulation electrode, and the third portion 842 may be a portion of the third manipulation electrode. It may also be provided that two portions are comprised in one manipulation electrode, and the other portion is comprised in a second manipulation electrode. The first area 810 is adjacent to the first portion 840 of the manipulation electrode and adjacent to recesses of the first set of recesses 830 and adjacent to recesses of the second set of recesses 831. The second area 811 is adjacent to the second portion 841 of the manipulation electrode and adjacent to recesses of to the first set of recesses 830 and adjacent to recesses of the second set of recesses 831. The third area 812 is adjacent to the third portion 842 and adjacent to recesses of the third set of recesses 832. The first set of recesses 830 and the second set of recesses 831 together form a T-pattern. The first set of recesses 830 comprises a plurality of squared/rectangular recesses, but the recesses may also have other shapes. The recesses of the first set of recesses 830 partially overlap when viewed in the second direction. The second set of recesses 831 comprises a plurality of squared/rectangular recesses, but the recesses may also have other shapes. The recesses of the second set of recesses 831 partially overlap when viewed in the first direction. The third set of recesses 832 comprises a single U-shaped recess. In the cross-sectional top view of Fig. 8, the structured electrode comprises, for each pair of areas of the plurality of areas, a respective set of recesses, wherein each recess of the respective set of recesses is located between the respective pair of areas. As a first pair, the first area 810 and the second area 811 may be considered. Each recess of the second set of recesses 831 that is located between the first area 810 and the second area 811 is comprised in the respective set of recesses of the first pair. As a second pair, the first area 810 and the third area 812 may be considered. Each recess of the first set of recesses 830 and each recess of the third set of recesses 832, which is located between the first area 810 and the third area 812, is comprised in the respective set of recesses of the second pair. As a third pair, the second area 811 and the third area 812 may be considered. Each recess of the first set of recesses 830 and each recess of the third set of recesses 832, which is located between the first area 811 and the third area 812, is comprised in the respective set of recesses of the third pair.

Fig. 9 shows a cross-sectional top view of a particle trap apparatus 900 according to embodiments of the present disclosure. Fig. 9 is generally similar to Figs. 1a and 8. The particle trap apparatus 900 comprises a set of trapping electrodes (not shown), a ground electrode (dark gray) and a manipulation electrode comprising a portion 940. In the cross-sectional top view of Fig. 9, the structured electrode comprises a plurality of areas comprising a first area 910, a second area 911 and a third area 912. Furthermore, the structured electrode comprises a first set of recesses 930, a second set of recesses 931 and a third set of recesses 932. Fig. 9 also shows the portion 940 of the manipulation electrode, denoted as "first portion" in the following, another portion 941 of a manipulation electrode, denoted as "second portion" in the following, yet another portion 942 of a manipulation electrode, denoted as "third portion" in the following, and yet another portion 943 of a manipulation electrode, denoted as "fourth portion" in the following. The second portion 941 is comprised in the manipulation electrode and conductively connected to the first portion 940. The third portion 942 and the fourth portion 943 may be a portion of the manipulation electrode. Alternatively, the particle trap apparatus may comprise a second manipulation electrode, in addition to the manipulation electrode, and the third portion 942 may be a portion of the second manipulation electrode, and the fourth portion 943 may be a portion of the second manipulation electrode. The first area 910 is adjacent to the first portion 940 of the manipulation electrode and adjacent to the first set of recesses 930 and adjacent to the second set of recesses 931. The second area 911 is adjacent to the second portion 941 of the manipulation electrode and adjacent to the first set of recesses 930 and adjacent to the second set of recesses 931. The third area 912 is adjacent to the third portion 942 of the manipulation electrode and adjacent to the fourth portion 943 of the manipulation electrode and adjacent to the third set of recesses 932. The first set of recesses 930 and the second set of recesses 931 together form a T-pattern, similar to the T-pattern in Fig. 8. The T-pattern of Fig. 9 comprises a gap between the first set of recesses 930 and the second set of recesses 931. The cross-sectional top view comprises a conductive connection between the first portion 940 of the manipulation electrode and the second portion 941 crossing the T-pattern through said gap. The third set of recesses 932 comprises a single recess. The third set of recesses 932 extends along a length in the first direction, in Fig. 9 from one side of the structured electrode to the opposite side of the structured electrode. The cross-sectional top view comprises a conductive connection between the third portion 942 of the manipulation electrode and the fourth portion 943 of the manipulation electrode. In a not exclusive first interpretation of Fig. 9, the structured electrode comprises a plurality of areas comprising the first area 910, the second area 911, the third area 912. The cross-sectional top view of the structured electrode comprises for each pair of areas of the plurality of areas a respective set of recesses, wherein each recess of the respective set of recesses is located between the respective areas. As a first pair, the first area 910 and the second area 911 may be considered. Each recess of the second set of recesses 931 that is located between the first area 910 and the second area 911 is comprised in the respective set of recesses of the first pair. As a second pair, the first area 910 and the third area 912 may be considered. Each recess of the first set of recesses 930 and of the third set of recesses 932 that is located between the first area 910 and the third area 912 is comprised in the respective set of recesses of the second pair. As a third pair, the second area 911 and the third area 912 may be considered. Each recess of the first set of recesses 930 and of the third set of recesses 932 that is located between the second area 911 and the third area 912 is comprised in the respective set of recesses of the third pair. In the cross-sectional top view, the first area 910 and the second area 911 are conductively connected. Furthermore, the first area 910 and the third area 912 are not conductively connected in the cross-sectional top view, as well as the second area 911 and the third area 912.

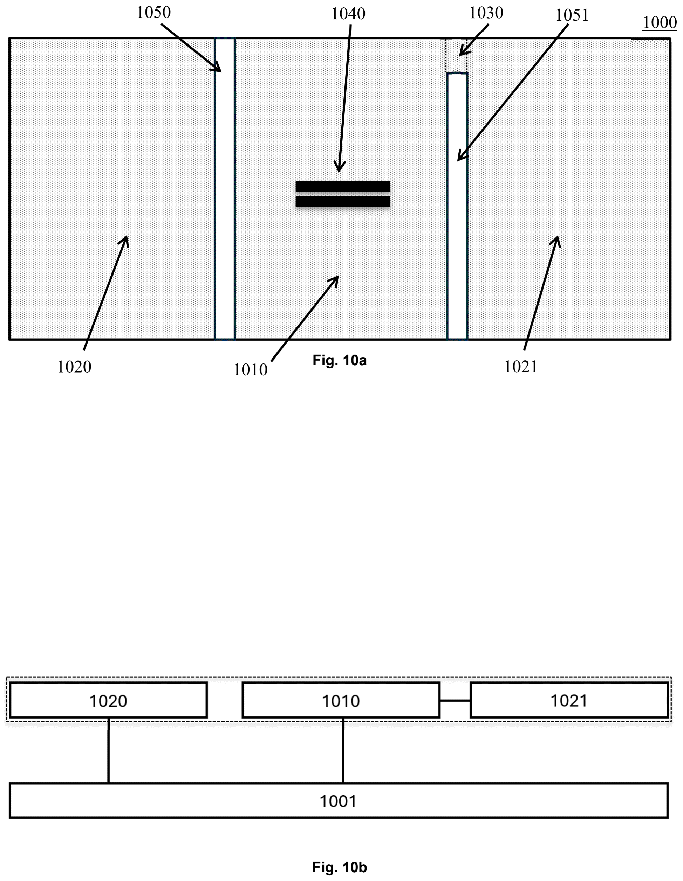

Fig. 10a shows a cross-sectional top view of a particle trap apparatus 1000 according to embodiments of the present disclosure. The particle trap apparatus 1000 comprises a set of trapping electrodes (not shown), a ground electrode (light gray) and a manipulation electrode (black), comprising a portion 1040. In the cross-sectional top view of Fig. 10a, the ground electrode is a structured electrode comprising a plurality of areas comprising a first area 1010, a second area 1020, a third area 1021, a first recess 1050, and a second recess 1051. The first recess 1050 and the second recess 1051 extend in the first direction. The plurality of areas comprises pairs of areas. Each pair of areas of the plurality of areas has a respective set of recesses, and each recess of the respective set of recesses is located between the respective pair of areas. The first area 1010 and the second area 1020 may be taken as a first pair. The recess 1050, which is located between the first area 1010 and the second area 1020, is comprised in the respective set of recesses of the first pair. The first area 1010 and the third area 1021 may be taken as a second pair. The recess 1051, which is located between the first area 1010 and the third area 1021, is comprised in the respective set of recesses of the second pair. The second area 1020 and the third area 1021 may be taken as a third pair. The recesses 1050 and 1051, which are located between the second area 1020 and the third area 1021, are comprised in the respective set of recesses of the second pair.

The first pair, area 1010 and area 1020, and the third pair, area 1020 and area 1021, are not conductively connected within the cross-sectional top view of Fig. 10. The second pair, area 1010 and area 1021, is conductively connected within the cross-sectional top view of Fig. 10, via portion 1030 of the structured electrode.

Fig. 10b is a schematic drawing of conductive connections of different areas of the structured electrode of Fig. 10a. Fig. 10b shows the conductive connections within the cross-sectional top view of Fig. 10a (dashed box) and the conductive connections to the electrical ground 1001 outside of the cross-sectional top view. The electrical ground 1001 may be an overall electrical ground of the particle trap apparatus 1000, which e.g. may be located in a lower layer of a multi-layer structure. The second area 1020 is directly (e.g., without other areas in-between) conductively connected to the electrical ground 1001 outside of the cross-sectional top view. The first area 1010 is conductively connected to the third area 1021 by the conductively connecting portion 1030 withing the cross-sectional top view. The first area 1010 is further directly conductively connected to the electrical ground 1001, outside of the cross-sectional top view. The third area 1021 is indirectly (cf. first area 1010) conductively connected to the to the electrical ground 1001 via the first area 1010. Horizontal lines represent a conductive connection within the cross-sectional top view. Vertical lines represent a conductive connection outside of the cross-sectional top view.

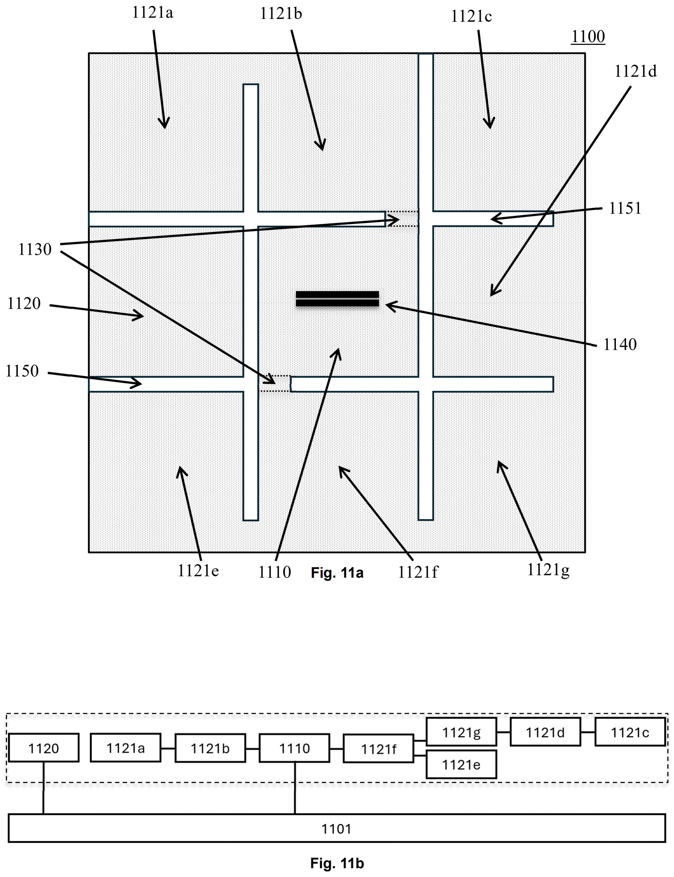

Fig. 11a shows a cross-sectional top view of a particle trap apparatus 1100 according to embodiments of the present disclosure. Fig. 11a is generally similar to Fig. 10a. The particle trap apparatus 1100 comprises a set of trapping electrodes (not shown), a ground electrode (light gray) and a manipulation electrode (black) comprising a portion 1140. The first area 1110 is adjacent to the portion 1140 of the manipulation electrode. In the cross-sectional top view of Fig. 11a, the ground electrode is a structured electrode comprising a plurality of areas comprising a first area 1110, areas 1121 a-g, and area 1120. The structured electrode further comprises a first recess 1150 and a second recess 1151 and connecting portions 1130. The plurality of areas comprises pairs of areas. Each pair of areas of the plurality of areas has a respective set of recesses, wherein all recesses of the respective set of recesses are located between the respective pair of areas. E.g. for the pair of the first area 1110 and the area 1120, the respective set of recesses comprises the first recess 1150. For the pair of the first area 1110 and the area 1121d, the respective set of recesses comprises the second recess 1151. For the pair of the area 1120 and the area 1121d, the respective set of recesses comprises the first recess 1150 and the second recess 1151.

The first area 1110 is directly conductively connected to the area 1121b and to the area 1121f, via connecting portions 1130, within the cross-sectional top view. The first area is further conductively connected to the area 1121a, 1121c, 1121d, 1121e and 1121g, via another one or more area/s, within the cross-sectional top view. The first area 1110 is not conductively connected to area 1120 within the cross-sectional top view.

Fig. 11b is a schematic drawing of conductive connections of different areas of the structured electrode of Fig. 11a. Fig. 11b is conceptionally similar to Fig. 10b. Fig. 11b shows the conductive connections within the cross-sectional top view of Fig. 11a (dashed box) and the conductive connections to the electrical ground 1101 outside of the cross-sectional top view. The electrical ground 1101 may be an overall electrical ground of the particle trap apparatus 1100, which e.g. may be located in a lower layer of a multi-layer structure. The first area 1110 and area 1120 are conductively connected to the electrical ground 1101, outside of the cross-sectional top view. The first area 1110 has no conductive connection to area 1120 within the cross-sectional top view. The first area 1110 is directly conductively connected to areas 1121b and 1121f, within the cross-sectional top view. The first area 1110 is conductively connected to areas 1121a, 1121c, 1121d, 1121e and 1121g via one or more other area/s in the cross-sectional top view. Horizontal lines represent a conductive connection within the cross-sectional top view. Vertical lines represent a conductive connection outside of the cross-sectional top view.

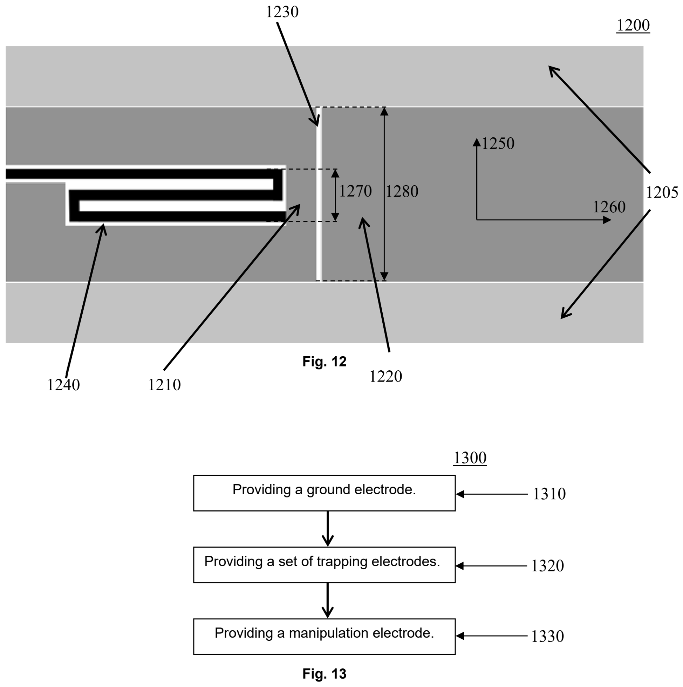

Fig. 12 shows a cross-sectional top view of a particle trap apparatus 1200 according to embodiments of the present disclosure. The particle trap apparatus 1200 comprises a set of trapping electrodes 1205 (light grey), a ground electrode (dark grey) and a manipulation electrode (black), comprising a portion 1240. In Fig. 12, the ground electrode is a structured electrode. It may also be provided that one of the set of trapping electrodes is a structured electrode, e.g. alternatively or in addition to the ground electrode being a structured electrode. In the cross-sectional top view of Fig. 12, the structured electrode comprises a first area 1210, a second area 1220 and a set of recesses 1230. In the embodiment of Fig. 12, the set of recesses 1230 comprises a single recess, but the set of recesses may also comprise a plurality of recesses. The first area 1210 is adjacent to the portion 1240 of the manipulation electrode and adjacent to the set of recesses 1230. Each recess of the set of recesses 1230 (in Fig. 12, the one recess) is located between the first area 1210 and the second area 1220. Each recess of the set of recesses 1230 (in Fig. 12, the one recess) does not comprise a conductive material of any electrode of the set of trapping electrodes 1205 and of the manipulation electrode 1240. In the cross-sectional top view of Fig. 12, the portion 1240 of the manipulation electrode extends along a first portion length 1270 in the first direction 1250 and the set of recesses extends along a first recess set length 1280 in the first direction 1250. In the cross-sectional top view of Fig. 12, the first recess set length 1280 is longer than the first portion length 1270 and the first portion length 1270 fully overlaps with the first recess set length 1280 when viewed in the second direction 1260. The second direction 1260 is orthogonal to the first direction 1250.

Fig. 13 illustrates a method 1300 of producing a particle trap apparatus according to the third aspect of the present disclosure. The method comprises providing 1310 a ground electrode, the ground electrode being configured to provide an electrical ground. The method comprises providing 1320 a set of trapping electrodes, the set of trapping electrodes being configured to provide a trapping potential of a particle trap. The method comprises providing 1330 a manipulation electrode, the manipulation electrode being configured to provide an oscillating magnetic field. The oscillating magnetic field is configured to perform a quantum operation on a particle trapped in the particle trap at a manipulation area of the particle trap apparatus. The ground electrode and/or one of the set of trapping electrodes is a structured electrode. In a cross-sectional top view, the structured electrode comprises a first area, a second area and a set of recesses. The first area is adjacent to a portion of the manipulation electrode and is adjacent to one or more recesses of the set of recesses. Each recess of the set of recesses is located between the first area and the second area. Each recess of the set of recesses does not comprise a conductive material of any electrode of the set of trapping electrodes and of the manipulation electrode. In the cross-sectional top view, the portion of the manipulation electrode extends along a first portion length in a first direction and the set of recesses extends along a first recess set length in the first direction. In the cross-sectional top view, the first recess set length is at least as long as the first portion length and the first portion length fully overlaps with the first recess set length when viewed in a second direction orthogonal to the first direction. The actions 1310, 1320, 1330 may generally be performed in various order and are not limited to one specific order.

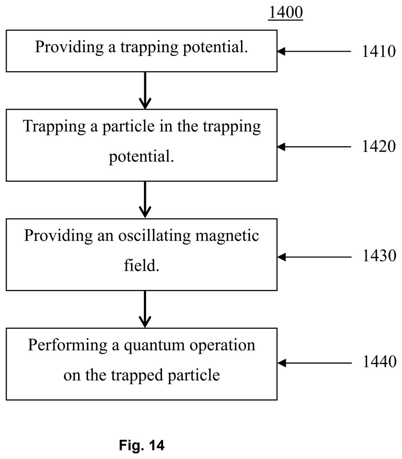

Fig. 14 illustrates a method 1400 of operating a particle trap apparatus according to the second aspect of the present disclosure. The method comprises providing 1410, by the set of trapping electrodes, the trapping potential of the particle trap. The method comprises trapping 1420 a particle in the trapping potential of the particle trap. The method comprises providing 1430, by the manipulation electrode, the oscillating magnetic field. The method comprises performing 1440, by the oscillating magnetic field, a quantum operation on the trapped particle. Optionally, the oscillating magnetic field has a wavelength in the structured electrode and the length of the longest straight line that is fully located within the structured electrode and adjacent to the portion of the manipulation electrode is less than 1/4 of the wavelength.

Although some aspects have been described in the context of an apparatus, it is clear that these aspects also represent a description of the corresponding method, where a block or a component corresponds to a method action or a feature of a method action. Analogously, aspects described in the context of a method also represent a description of a corresponding component or item or feature of a corresponding apparatus.

## Claims

1. A particle trap apparatus (1200), comprising:
a set of trapping electrodes (1205), a ground electrode (1220) and a manipulation electrode, the set of trapping electrodes (1205) being configured to provide a trapping potential of a particle trap, the ground electrode (1220) being configured to provide an electrical ground, the manipulation electrode (1240) being configured to provide an oscillating magnetic field, the oscillating magnetic field being configured to perform a quantum operation on a particle trapped in the particle trap at a manipulation area of the particle trap apparatus,
wherein the ground electrode (1220) or one of the set of trapping electrodes (1205) is a structured electrode,
wherein, in a cross-sectional top view, the structured electrode comprises a first area (1210), a second area (1220) and a set of recesses (1230), the first area (1210) being adjacent to a portion (1240) of the manipulation electrode and being adjacent to one or more recesses of the set of recesses (1230), each recess of the set of recesses being located between the first area (1210) and the second area (1220),
wherein each recess of the set of recesses (1230) does not comprise a conductive material of any electrode of the set of trapping electrodes and of the manipulation electrode,
wherein, in the cross-sectional top view, the portion of the manipulation electrode extends along a first portion length (1270) in a first direction (1250) and the set of recesses extends along a first recess set length (1280) in the first direction (1250),
wherein, in the cross-sectional top view, the first recess set length (1280) is at least as long as the first portion length (1270) and the first portion length (1270) fully overlaps with the first recess set length (1280) when viewed in a second direction (1260) orthogonal to the first direction.

2. The particle trap apparatus according to claim 1,
wherein, in the cross-sectional top view, 50% or more of the positions of the first portion length (1270) overlap with one or more recesses of the set of recesses (1230) when viewed in the second direction,
wherein optionally, in the cross-sectional top view, each position of the first portion length (1270) overlaps with one or more recesses of the set of recesses (1230) when viewed in the second direction.

3. The particle trap apparatus according to any of the preceding claims,
wherein each recess of the set of recesses (1230) does not comprise a conductive material of the ground electrode,
wherein optionally, each recess of the set of recesses (1230) does not comprise any conductive material.

4. The particle trap apparatus according to any of the preceding claims,
wherein, in the cross-sectional top view, a length of the longest straight line that is fully located within the structured electrode and that is fully located on the side of the set of recesses (1230) where the portion (1240) of the manipulation electrode is located is less than the distance between two points that are located furthest away from each other within the structured electrode, optionally less than the distance between two points that are located furthest away from each other within the structured electrode divided by the square root of two, and/or
wherein, in the cross-sectional top view, a length of the longest straight line that is fully located within the structured electrode and that is adjacent to the portion (1240) of the manipulation electrode is less than the distance between two points that are located furthest away from each other within the structured electrode, optionally less than the distance between two points that are located furthest away from each other within the structured electrode divided by the square root of two.

5. The particle trap apparatus according to any of the preceding claims,
wherein, in the cross-sectional top view, a length of the longest straight line that is fully located within the structured electrode and that is fully located on the side of the set of recesses (1230) where the portion of the manipulation electrode is located is 50 mm or less, and/or
wherein, in the cross-sectional top view, a length of the longest straight line that is fully located within the structured electrode and adjacent to the portion of the manipulation electrode is 50 mm or less.

6. The particle trap apparatus according to any of the preceding claims,
wherein, in the cross-sectional top view, a length of the longest straight line that is fully located within the structured electrode is less than the distance between two points that are located furthest away from each other within the structured electrode,
wherein optionally, in the cross-sectional top view, the length of the longest straight line that is fully located within the structured electrode is less than the distance between two points that are located furthest away from each other within the structured electrode divided by the square root of two, and/or
wherein, in the cross-sectional top view, the length of the longest straight line that is fully located within the structured electrode is less than 1/4 of the wavelength of the oscillating magnetic field in the structured electrode, and/or
wherein, in the cross-sectional top view, the length of the longest straight line that is fully located within the structured electrode is 50 mm or less.

7. The particle trap apparatus according to any of the preceding claims,
wherein, in the cross-sectional top view, the first area and the second area are conductively connected, or
wherein, in the cross-sectional top view, the first area and the second area are not conductively connected.

8. The particle trap apparatus according to any of the preceding claims,
wherein the particle trap apparatus comprises a multi-layer structure comprising a first layer and a second layer, and
wherein the first layer comprises the structured electrode.

9. The particle trap apparatus according to claim 8,
wherein, in the cross-sectional top view, the first area and the second area are not conductively connected,
wherein the first area and the second area are conductively connected via the multi-layer structure, and/or
wherein the first area and the second area are conductively connected outside of the multi-layer structure.

10. The particle trap apparatus according to according to one of the preceding claims,
wherein, in the cross-sectional top view, the structured electrode comprises a plurality of areas comprising the first area and the second area,
wherein, in the cross-sectional top view, the structured electrode comprises, for each pair of areas of the plurality of areas, a respective set of recesses, wherein each recess of the respective set of recesses is located between the respective pair of areas, and
wherein, in the cross-sectional top view, a pair of the plurality of areas is conductively connected, and/or
wherein, in the cross-sectional top view, a pair of the plurality of areas is not conductively connected and is conductively connected via the multi-layer structure, and/or
wherein, in the cross-sectional top view, a pair of the plurality of areas is not conductively connected and is conductively connected outside of the multi-layer structure.

11. The particle trap apparatus according to any of the preceding claims,
wherein the set of recesses comprises a plurality of recesses,
wherein optionally, in the cross-sectional top view, recesses of the set of recesses overlap when viewed in the second direction.

12. The particle trap apparatus according to any of the preceding claims,
wherein the manipulation electrode comprises a second portion or wherein the particle trap apparatus comprises a second manipulation electrode comprising a second portion, and
wherein, in the cross-sectional top view, the second area is adjacent to one or more recesses of the set of recesses and the second area is adjacent to the second portion, and
wherein the second portion extends along a second portion length in the first direction, and
wherein the first recess set length is longer than the second portion length and the second portion length fully overlaps with the first recess set length when viewed in the second direction.

13. The particle trap apparatus according to any of the preceding claims,
wherein the set of trapping electrodes comprises a set of RF electrodes and the trapping potential comprises an RF trapping potential, the set of RF electrodes being configured to provide the RF trapping potential, and/or
wherein the trapping electrode comprises a set of DC electrodes and the trapping potential comprises a DC trapping potential, the set of DC electrodes being configured to provide the DC trapping potential.

14. A method (1400) of operating the particle trap apparatus according to any of claims 1 to 13, wherein the method comprises:
providing (1410), by the set of trapping electrodes, the trapping potential of the particle trap,
trapping (1420) a particle in the trapping potential of the particle trap,
providing (1430), by the manipulation electrode, the oscillating magnetic field, and
performing (1440), by the oscillating magnetic field, a quantum operation on the trapped particle,
wherein optionally, the oscillating magnetic field has a wavelength in the structured electrode and the length of the longest straight line that is fully located within the structured electrode and adjacent to the portion of the manipulation electrode is less than 1/4 of the wavelength.

15. A method (1300) of producing a particle trap apparatus, the method comprising:
providing (1310) a ground electrode, the ground electrode being configured to provide an electrical ground,
providing (1320) a set of trapping electrodes, the set of trapping electrodes being configured to provide a trapping potential of a particle trap,
providing (1330) a manipulation electrode, the manipulation electrode being configured to provide an oscillating magnetic field, the oscillating magnetic field being configured to perform a quantum operation on a particle trapped in the particle trap at a manipulation area of the particle trap apparatus,
wherein the ground electrode or one of the set of trapping electrodes is a structured electrode,
wherein, in a cross-sectional top view, the structured electrode comprises a first area, a second area and a set of recesses, the first area being adjacent to a portion of the manipulation electrode and being adjacent to one or more recesses of the set of recesses, each recess of the set of recesses being located between the first area and the second area,
wherein each recess of the set of recesses does not comprise a conductive material of any electrode of the set of trapping electrodes and of the manipulation electrode,
wherein, in the cross-sectional top view, the portion of the manipulation electrode extends along a first portion length in a first direction and the set of recesses extends along a first recess set length in the first direction,
wherein, in the cross-sectional top view, the first recess set length is at least as long as the first portion length and the first portion length fully overlaps with the first recess set length when viewed in a second direction orthogonal to the first direction.
